(19) 

Europäisches
Patentamt
European
Patent Office
Office européen
des brevets

(11) **EP 4 694 121 A1**

(12) **EUROPEAN PATENT APPLICATION**
published in accordance with Art. 153(4) EPC

(43) Date of publication:
**11.02.2026 Bulletin 2026/07**

(21) Application number: **24853709.4**

(22) Date of filing: **09.08.2024**

(51) International Patent Classification (IPC):
***H04N 19/157*** *(2014.01)*

(52) Cooperative Patent Classification (CPC):
**H04N 19/146; H04N 19/157; H04N 19/169;
H04N 19/182; H04N 19/186; H04N 19/196**

(86) International application number:
**PCT/CN2024/111119**

(87) International publication number:
**WO 2025/036300 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.08.2023 CN 202311032268
06.08.2024 CN 202411081644**

(71) Applicant: **Huawei Technologies Co., Ltd.
Shenzhen, Guangdong 518129 (CN)**

(72) Inventors:
• **XU, Weiwei
Shenzhen, Guangdong 518129 (CN)**
• **YU, Quanhe
Shenzhen, Guangdong 518129 (CN)**
• **WANG, Yichuan
Shenzhen, Guangdong 518129 (CN)**

(74) Representative: **Eisenführ Speiser
Patentanwälte Rechtsanwälte PartGmbB
Johannes-Brahms-Platz 1
20355 Hamburg (DE)**

(54) **ENCODING METHOD, DECODING METHOD, AND RELATED DEVICE**

(57)  This application provides an encoding method, a decoding method, and a related device. The method includes: obtaining a first HDR image and first base layer data corresponding to the first HDR image; determining first intermediate enhancement layer data based on the first HDR image and the first base layer data; processing the first intermediate enhancement layer data based on a first mapping relationship, to obtain first enhancement layer data; and encoding the first base layer data, the first enhancement layer data, and first metadata, to obtain a bitstream. In the foregoing technical solution, the encoded first enhancement layer data is determined based on the first mapping relationship. The to-be-encoded data can be flexibly processed based on the first mapping relationship. This can improve encoding efficiency.

[FIG. 12]

| Obtain a first HDR image and base layer data corresponding to the first HDR image |
| 1201 |
| Determine first intermediate enhancement layer data based on the first HDR image and the first base layer data |
| 1202 |
| Process the first intermediate enhancement layer data based on a first mapping relationship, to obtain first enhancement layer data |
| 1203 |
| Encode the first base layer data, the first enhancement layer data, and first metadata, to obtain a bitstream |
| 1204 |

EP 4 694 121 A1

**Description**

This application claims priorities to Chinese Patent Application No. 202311032268.9, filed with the China National Intellectual Property Administration on August 15, 2023, and entitled "ENCODING METHOD AND RELATED DEVICE", and to Chinese Patent Application No. 202411081644.8, filed with the China National Intellectual Property Administration on August 6, 2024, and entitled "ENCODING METHOD, DECODING METHOD, AND RELATED DEVICE", both of which are incorporated herein by reference in their entireties.

TECHNICAL FIELD

This application relates to the coding field, and more specifically, to an encoding method, a decoding method, and a related device.

BACKGROUND

A dynamic range (dynamic range) represents a ratio of a maximum value to a minimum value of a variable in many fields. For a digital image, a dynamic range represents a ratio of a maximum grayscale value to a minimum grayscale value in a range in which the image can be displayed. A dynamic range in nature is quite large. A night scene under the starry sky has a luminance of approximately 0.001 cd/m$^2$. The sun has a luminance up to 1000000000 cd/m$^2$. Such a dynamic range achieves an order of magnitude of $1000000000/0.001=10^{13}$. However, the luminance of the sun and the luminance of the starry sky are not obtained at the same time in a real scene in nature. In the real world, a dynamic range of a natural scene is from $10^{-3}$ to $10^6$. Currently, in most color digital images, red (red, R), green (green, G), and blue (blue, B) channels each use one byte of eight bits for storage. In other words, a representation range of each channel is from 0 to 255 grayscale levels, where 0 to 255 herein is a dynamic range of the image. In the real world, a dynamic range of a same scene is from $10^{-3}$ to $10^6$ and may be referred to as a high dynamic range (high dynamic range, HDR), and relatively, a dynamic range of a common image or video is a low dynamic range (low dynamic range, LDR).

An HDR image or HDR video may need to be transcoded during delivery or transmission. In a current HDR transcoding solution, the HDR image or HDR video is directly transcoded. After the HDR image or HDR video is decoded, an HDR pixel value, and an HDR format identifier and information are obtained. The HDR pixel value usually needs to be processed (for example, image upsampled/downsampled, and enhanced). The HDR format identifier and information, and a processed HDR pixel value are then sent to an encoder for re-encoding. A re-encoded HDR image or HDR video is delivered to another device. Such a solution of directly transcoding the HDR image or HDR video (which may be referred to as a "single-layer transcoding solution") may cause an exception to a transcoded HDR image or HDR video, affecting user experience.

Therefore, how to provide a more effective encoding/decoding solution is an urgent problem to be resolved in this field.

SUMMARY

This application provides an encoding method, a decoding method, and a related device, to improve encoding efficiency.

According to a first aspect, an embodiment of this application provides an encoding method. The method includes: obtaining a first HDR image and first base layer data corresponding to the first HDR image; determining first intermediate enhancement layer data based on the first HDR image and the first base layer data; processing the first intermediate enhancement layer data based on a first mapping relationship, to obtain first enhancement layer data; and encoding the first base layer data, the first enhancement layer data, and first metadata, to obtain a bitstream.

In the foregoing technical solution, the encoded first enhancement layer data is determined based on the first mapping relationship. To-be-encoded data can be flexibly processed based on the first mapping relationship. This can improve encoding efficiency.

With reference to the first aspect, in a possible implementation of the first aspect, determining the first intermediate enhancement layer data based on the first HDR image and the first base layer data includes: determining second base layer data based on the first base layer data; and determining the first intermediate enhancement layer data based on the first HDR image and the second base layer data.

With reference to the first aspect, in a possible implementation of the first aspect, determining the second base layer data based on the first base layer data includes: processing the first base layer data based on a second mapping relationship, to obtain the second base layer data.

The first base layer data is processed based on the second mapping relationship. This can further improve encoding efficiency.

With reference to the first aspect, in a possible implementation of the first aspect, before processing the first base layer data based on the second mapping relationship, to determine the second base layer data, the method further includes: determining at least one feature luminance value based on the first HDR image; determining at least one pixel from the first base layer data, where the at least one pixel one-to-one corresponds to the at least one feature luminance value, and a location of each pixel in the at least one pixel is the same as a location of a corresponding feature luminance value; and determining the second mapping relationship based on the at least one feature luminance value and a value of the at least one pixel.

With reference to the first aspect, in a possible implementation of the first aspect, processing the first base layer data based on the second mapping relationship, to determine the second base layer data includes: the first base layer data and the second base layer data satisfy the following relationship: $baseAfter[i]=TMB_2(R_{base[i]\_1})$, where $baseAfter[i]$ represents a value of an $i^{th}$ pixel in the second base layer data, $R_{base[i]\_1}$ represents a value of an $i^{th}$ pixel in the first base layer data or a first reference value, $TMB_2(\ )$ represents the second mapping relationship, and the first reference value is determined based on the value of the $i^{th}$ pixel in the first base layer data; or the first base layer data and the second base layer data satisfy the following relationship: $baseAfter[i]=TMB_2(R_{base[i]\_2}) \times R_{base[i]\_3}$, where $baseAfter[i]$ represents a value of an $i^{th}$ pixel in the second base layer data, $TMB_2(\ )$ represents the second mapping relationship, $R_{base[i]\_2}$ is a value of an $i^{th}$ pixel in the first base layer data or a second reference value, the second reference value is a second reference value, of the $i^{th}$ pixel, determined based on the value of the $i^{th}$ pixel in the first base layer data, $R_{base[i]\_3}$ is the value of the $i^{th}$ pixel in the first base layer data or a third reference value, and the third reference value is determined based on the value of the $i^{th}$ pixel in the first base layer data.

With reference to the first aspect, in a possible implementation of the first aspect, determining the first intermediate enhancement layer data based on the first HDR image and the second base layer data includes: processing the second base layer data based on a target conversion function, to obtain a converted result; and determining the first intermediate enhancement layer data based on the first HDR image and the converted result.

With reference to the first aspect, in a possible implementation of the first aspect, determining the first enhancement layer data based on the first mapping relationship and the first intermediate enhancement data includes: performing downsampling on the first intermediate enhancement layer data, to obtain second intermediate enhancement layer data; and processing the second intermediate enhancement data based on the first mapping relationship, to obtain the first enhancement layer data.

The downsampling is performed on the first intermediate layer data. This can effectively reduce an amount of data that needs to be encoded, and further improve encoding efficiency.

With reference to the first aspect, in a possible implementation of the first aspect, performing the downsampling on the first intermediate enhancement layer data, to obtain the second intermediate enhancement layer data includes: determining a target interpolation manner; and performing the downsampling on the first intermediate enhancement data based on the target interpolation manner.

With reference to the first aspect, in a possible implementation of the first aspect, determining the target interpolation manner includes: determining the target interpolation manner from a plurality of interpolation manners, where a difference between the first intermediate enhancement data and restored data obtained after upsampling is performed on the second intermediate enhancement data based on the target interpolation manner is less than a difference between the first intermediate enhancement data and restored data obtained after upsampling is performed on reference intermediate enhancement data based on a reference interpolation manner, the reference intermediate enhancement data is intermediate enhancement data obtained after the downsampling is performed on the first intermediate enhancement data based on the reference interpolation manner, and the reference interpolation manner is any interpolation manner other than the target interpolation manner in the plurality of interpolation manners.

With reference to the first aspect, in a possible implementation of the first aspect, the first metadata includes interpolation manner indication information, and the interpolation manner indication information indicates the target interpolation manner.

With reference to the first aspect, in a possible implementation of the first aspect, the first mapping relationship includes one or more of the following: a numerical mapping relationship, a sigmoid curve, a cubic spline curve, a gamma curve, a linear curve, or a piecewise curve.

According to a second aspect, an embodiment of this application provides a decoding method. The method includes: decoding an obtained bitstream, to obtain first base layer data, first enhancement layer data, and first metadata; processing the first enhancement layer data based on a third mapping relationship, to obtain third intermediate enhancement layer data; and determining a second HDR image based on the third intermediate enhancement layer data and the first base layer data.

In the foregoing technical solution, enhancement layer data is determined based on a mapping relationship during decoding. To-be-encoded data can be flexibly processed during encoding. This can improve encoding efficiency.

With reference to the second aspect, in a possible implementation of the second aspect, determining the second HDR image based on the third intermediate enhancement layer data and the first base layer data includes: determining third base layer data based on the first base layer data; and determining the second HDR image based on the third intermediate enhancement layer data and the third base layer data.

With reference to the second aspect, in a possible implementation of the second aspect, determining the third base layer data based on the first base layer data includes: processing the first base layer data based on a fourth mapping relationship, to obtain the third base layer data.

In the foregoing technical solution, base layer data is determined based on a mapping relationship during decoding. To-be-encoded data can be more flexibly processed during encoding. This can improve encoding efficiency.

With reference to the second aspect, in a possible implementation of the second aspect, processing the first base layer data based on the fourth mapping relationship, to determine the third base layer data includes: the first base layer data and the third base layer data satisfy the following relationship: $baseAfter[i]=TMB_4(R_{base[i]\_1})$, where $baseAfter[i]$ represents a value of an $i^{th}$ pixel in the third base layer data, $R_{base[i]\_1}$ represents a value of an $i^{th}$ pixel in the first base layer data or a first reference value, $TMB_4(\ )$ represents the fourth mapping relationship, and the first reference value is determined based on the value of the $i^{th}$ pixel in the first base layer data; or the first base layer data and the third base layer data satisfy the following relationship: $baseAfter[i]=TMB_4(R_{base[i]\_2})\times R_{base[i]\_3}$, where $baseAfter[i]$ represents a value of an $i^{th}$ pixel in the third base layer data, $TMB_4(\ )$ represents the fourth mapping relationship, $R_{base[i]\_2}$ is a value of an $i^{th}$ pixel in the first base layer data or a second reference value, the second reference value is a second reference value, of the $i^{th}$ pixel, determined based on the value of the $i^{th}$ pixel in the first base layer data, $R_{base[i]\_3}$ is the value of the $i^{th}$ pixel in the first base layer data or a third reference value, and the third reference value is determined based on the value of the $i^{th}$ pixel in the first base layer data.

With reference to the second aspect, in a possible implementation of the second aspect, determining the second HDR image based on the third intermediate enhancement layer data and the third base layer data includes: processing the third intermediate enhancement layer data based on a target conversion function, to obtain a converted result; and determining the second HDR image based on the third base layer data and the converted result.

With reference to the second aspect, in a possible implementation of the second aspect, after processing the first enhancement layer data based on the third mapping relationship, to obtain the third intermediate enhancement layer data, the method further includes: performing upsampling on the third intermediate enhancement layer data.

The upsampling can be used to restore the enhancement layer data, so that an HDR image combined based on the restored enhancement layer data has a higher restoration degree. Correspondingly, an encoder side may perform corresponding downsampling processing. The downsampling can be used to reduce an amount of data that needs to be encoded. This improves encoding efficiency.

With reference to the second aspect, in a possible implementation of the second aspect, the first metadata includes interpolation manner indication information, the interpolation manner indication information indicates a target interpolation manner, and the target interpolation manner is used to perform the upsampling on the first enhancement layer data.

With reference to the second aspect, in a possible implementation of the second aspect, the third mapping relationship includes one or more of the following: a numerical mapping relationship, a sigmoid curve, a cubic spline curve, a gamma curve, a linear curve, or a piecewise curve.

According to a third aspect, an embodiment of this application provides an electronic device. The electronic device is configured to implement any one of the first aspect or the possible implementations of the first aspect.

According to a fourth aspect, an embodiment of this application provides an electronic device. The electronic device is configured to implement any one of the second aspect or the possible implementations of the second aspect.

According to a fifth aspect, an embodiment of this application provides an electronic device. The electronic device includes a processor. The processor is configured to: be coupled to a storage, and read and execute instructions and/or program code in the storage, to perform any one of the first aspect or the possible implementations of the first aspect.

According to a sixth aspect, an embodiment of this application provides an electronic device. The electronic device includes a processor. The processor is configured to: be coupled to a storage, and read and execute instructions and/or program code in the storage, to perform any one of the second aspect or the possible implementations of the second aspect.

According to a seventh aspect, an embodiment of this application provides a chip system. The chip system includes a logic circuit. The logic circuit is configured to: be coupled to an input/output interface, and transmit data through the input/output interface, to perform any one of the first aspect or the possible implementations of the first aspect.

According to an eighth aspect, an embodiment of this application provides a chip system. The chip system includes a logic circuit. The logic circuit is configured to: be coupled to an input/output interface, and perform data transmission through the input/output interface, to perform any one of the second aspect or the possible implementations of the second aspect.

According to a ninth aspect, an embodiment of this application provides a computer-readable storage medium. The computer-readable storage medium stores program code. When the program code stored in the computer storage medium is run on a computer, the computer is enabled to perform any one of the first aspect or the possible implementations of the first aspect.

According to a tenth aspect, an embodiment of this application provides a computer-readable storage medium. The computer-readable storage medium stores program code. When the program code stored in the computer storage medium is run on a computer, the computer is enabled to perform any one of the second aspect or the possible implementations of the second aspect.

According to an eleventh aspect, an embodiment of this application provides a computer program product. The computer program product includes computer program code. When the computer program code is run on a computer, the computer is enabled to perform any one of the second aspect or the possible implementations of the second aspect.

According to a twelfth aspect, an embodiment of this application provides a computer program product. The computer program product includes computer program code. When the computer program code is run on a computer, the computer is enabled to perform any one of the second aspect or the possible implementations of the second aspect.

According to a thirteenth aspect, an embodiment of this application provides a bitstream. The bitstream is determined according to any one of the first aspect or the possible implementations of the first aspect.

According to a fourteenth aspect, an embodiment of this application provides a bitstream. The bitstream includes first base layer data, first enhancement layer data, and first metadata that correspond to a first HDR image.

Optionally, the first enhancement layer data is determined based on a first mapping relationship and first intermediate enhancement data.

Optionally, the first intermediate enhancement data is determined based on the first HDR image and the first base layer data.

According to a fifteenth aspect, an embodiment of this application provides a bitstream storage apparatus. The apparatus is configured to store the bitstream in the thirteenth aspect or the fourteenth aspect.

According to a sixteenth aspect, an embodiment of this application provides a bitstream transmission apparatus. The apparatus includes a transmitter and a receiver. The receiver is configured to receive a bitstream generated according to the method in the second aspect, and the transmitter is configured to send the bitstream to a client device through a transmission medium.

According to a seventeenth aspect, an embodiment of this application provides a bitstream transmission apparatus. The apparatus includes a transmitter and at least one storage medium. The at least one storage medium is configured to store a bitstream generated according to the method in the second aspect, and the transmitter is configured to obtain the bitstream from the storage medium and send the bitstream to a client device through a transmission medium.

According to an eighteenth aspect, an embodiment of this application provides a bitstream delivery system. The system includes at least one storage medium, configured to store a bitstream generated according to the method in the second aspect, and a streaming media server, configured to: obtain a target bitstream from the at least one storage medium and send the target bitstream to a client device, where the streaming media server includes a content server or a content delivery server.

BRIEF DESCRIPTION OF DRAWINGS

FIG. 1 is a diagram of dynamic range mapping;
FIG. 2 is a diagram of a PQ optical-electro transfer function;
FIG. 3 is a diagram of an HLG optical-electro transfer function;
FIG. 4 is a diagram of an SLF optical-electro transfer function;
FIG. 5 is a block diagram of a coding system to which an embodiment of this application is applied;
FIG. 6 is a block diagram of a content supply system for implementing a content delivery service to which an embodiment of this application is applied;
FIG. 7 is a diagram of an operating procedure of a streaming media system to which an embodiment of this application is applicable;
FIG. 8 is a diagram of an example of an end-to-end process according to this application;
FIG. 9 shows an example architecture of a streaming media system according to this application;
FIG. 10 is a diagram of a possible system architecture to which an embodiment of this application is applicable;
FIG. 11 is a diagram of a digital signal processing method according to an embodiment of this application;
FIG. 12 is a schematic flowchart of an encoding method according to an embodiment of this application;
FIG. 13 is a schematic flowchart of a decoding method according to an embodiment of this application;
FIG. 14 is a block diagram of a structure of an electronic device according to an embodiment of this application; and
FIG. 15 is a block diagram of a structure of another electronic device according to an embodiment of this application.

DESCRIPTION OF EMBODIMENTS

The following describes technical solutions of this application with reference to accompanying drawings.

In this application, "at least one" means one or more, and "a plurality of" means two or more. "And/Or" describes an association relationship between associated objects, and indicates that three relationships may exist. For example, A and/or B may indicate the following three cases: Only A exists, both A and B exist, and only B exists. A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

For ease of understanding of embodiments of this application, some concepts or terms in embodiments of this application are first described.

A color value (color value) is a value corresponding to a particular color component (for example, R, G, B, or Y) of an image.

A digital code value (digital code value) is a digital expression value of an image signal, and the digital code value is used to represent a nonlinear color value.

A linear color value (linear color value) is in direct proportion to light intensity, needs to be normalized to [0, 1] in an optional case, and is abbreviated as E.

A nonlinear color value (nonlinear color value) is a normalized digital expression value of image information, is in direct proportion to a digital code value, needs to be normalized to [0, 1] in an optional case, and is abbreviated as E'.

An electro-optical transfer function (electro-optical transfer function, EOTF) describes a relationship of conversion from a nonlinear color value to a linear color value.

Metadata (Metadata) is data that is carried in a video signal and that describes video source information.

Dynamic metadata (dynamic metadata) is metadata associated with each frame of image, and the metadata changes with different pictures.

Static metadata (static metadata) is metadata associated with an image sequence, and the metadata remains unchanged in the image sequence.

A luminance signal (luma) represents a combination of nonlinear color signals, and is symbolized by Y'.

Luminance mapping (luminance mapping) is mapping from luminance of a source picture to luminance of a target system.

Display adaptation (display adaptation) is to process a video signal to adapt to a display property of a target display.

A source picture (source picture) is a picture that is input in an HDR pre-processing stage.

A mastering display (mastering display) is a reference display used when a video signal is edited and produced, and is used to determine editing and producing effect of a video.

A linear scene light (linear scene light) signal is an HDR video signal using content as scene light in an HDR video technology, is scene light captured by a camera/lens sensor, and is generally a relative value. Hybrid log-gamma (hybrid log-gamma, HLG) coding is performed on the linear scene light signal to obtain an HLG signal, the HLG signal is a scene light signal, and the HLG signal is nonlinear. The scene light signal generally needs to be converted into a display light signal through an OOTF, to be displayed on a display device.

A linear display light (linear display light) signal is an HDR video signal using content as display light in an HDR video technology, is display light emitted by a display device, and is generally an absolute value in a unit of nit (nit). Perceptual quantization (perceptual quantization, PQ) coding is performed on the linear display light signal to obtain a PQ signal, the PQ signal is a display light signal, and the PQ signal is a nonlinear signal. The display light signal is generally displayed on the display device based on absolute luminance thereof.

An opto-optical transfer function (opto-optical transfer function, OOTF) is a curve used to convert one light signal into another light signal in a video technology.

A dynamic range (dynamic range) is a ratio of the highest luminance to the lowest luminance of a video signal.

Luminance-chrominance-chrominance (luma-chroma-chroma, LCC) is three components of a video signal in which luminance and chrominance are separated.

An optical-electro transfer function (optical-electro transfer function, OETF) indicates a conversion relationship between a linear signal of an image pixel and a nonlinear signal. Currently, commonly used optical-electro transfer functions include the following three types:

perceptual quantizer (perceptual quantizer, PQ) optical-electro transfer function, hybrid log-gamma (hybrid log-gamma, HLG) optical-electro transfer function, and scene luminance fidelity (scene luminance fidelity, SLF) optical-electro transfer function, where the three optical-electro transfer functions are optical-electro transfer functions specified in the audio video coding standard (Audio Video coding Standard, AVS).

The dynamic range (dynamic range) represents a ratio of a maximum value to a minimum value of a variable in many fields. For a digital image, a dynamic range represents a ratio of a maximum grayscale value to a minimum grayscale value in a range in which the image can be displayed. A dynamic range in nature is quite large. A night scene under the starry sky has a luminance of approximately 0.001 cd/m$^2$. The sun has a luminance up to 1000000000 cd/m$^2$. Such a dynamic range achieves an order of magnitude of $1000000000/0.001=10^{13}$. However, the luminance of the sun and the luminance of the starry sky are not obtained at the same time in a real scene in nature. In the real world, a dynamic range of a natural scene is from $10^{-3}$ to $10^6$. Currently, in most color digital images, R, G, and B channels each use one byte of eight bits for storage. In other words, a representation range of each channel is from 0 to 255 grayscale levels, where 0 to 255 herein is a dynamic range of the image. In the real world, a dynamic range of a same scene is from $10^{-3}$ to $10^6$ and is referred to as a high dynamic range (high dynamic range, HDR) by us, and relatively, a dynamic range of a common image or video is a low dynamic range (low dynamic range, LDR). An imaging process of a digital camera is actually mapping from the high dynamic range of the real world to a low dynamic range of a photo. This is usually a nonlinear process.

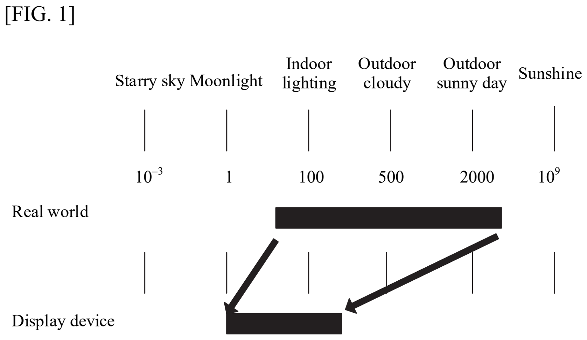

FIG. 1 is a diagram of dynamic range mapping.

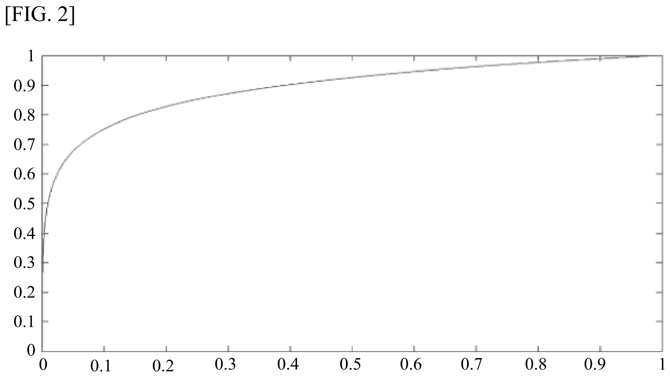

The PQ optical-electro transfer function is a perceptual quantizer optical-electro transfer function provided based on a luminance perception model for human eyes. FIG. 2 is a diagram of the PQ optical-electro transfer function. The PQ optical-electro transfer function indicates a conversion relationship between a linear signal value of an image pixel and a nonlinear signal value in PQ domain.

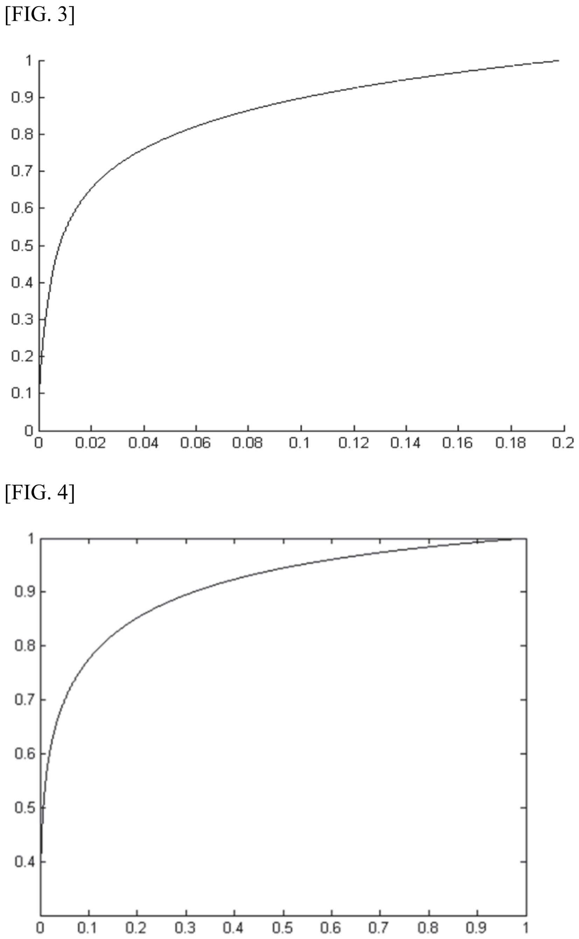

The HLG optical-electro transfer function is obtained by improving a conventional gamma curve. FIG. 3 is a diagram of the HLG optical-electro transfer function. For the HLG optical-electro transfer function, the conventional gamma curve is used in the lower half region, and a log curve is added to the upper half region. The HLG optical-electro transfer function indicates a conversion relationship between a linear signal value of an image pixel and a nonlinear signal value in HLG domain.

The SLF optical-electro transfer function is an optimal curve obtained based on luminance distribution in an HDR scene when optical characteristics of human eyes are satisfied. FIG. 4 is a diagram of the SLF optical-electro transfer function. An SLF optical-electro transfer curve indicates a conversion relationship between a linear signal value of an image pixel and a nonlinear signal value in SLF domain.

Linear space in this application is space in which a linear light signal is located.

Nonlinear space in this application is space in which a signal obtained after a linear light signal is converted by using a nonlinear curve is located. Common nonlinear curves of the HDR include the PQ EOTF-1 curve, the HLG OETF curve, and the like, and a common nonlinear curve of the SDR includes a gamma curve. Generally, it is considered that a signal obtained after a linear light signal is coded by using the nonlinear curve is visually linear relative to human eyes. It should be understood that the nonlinear space may be considered as visual linear space.

Gamma correction (gamma correction) is a method for performing nonlinear hue editing on an image. A dark-colored part and a light-colored part in the image signal can be detected, and proportions of the two parts are increased, to improve image contrast effect. Optical-electro transfer features of existing display screens, photographic films, and many electronic cameras may be nonlinear. A relationship between outputs and inputs of these nonlinear components may be represented by using a power function, namely: output=(input) $\gamma$.

Because a visual system of the human being is nonlinear, and the human being perceives visual stimulation through comparison, nonlinear conversion is performed on a color value output by a device. Stimulation is enhanced by the outside world at a particular proportion, and for the human being, such stimulation evenly increases. Therefore, for perception of the human being, a physical quantity increasing in a geometric progression is even. To display input colors based on a visual law of the human being, nonlinear conversion in the form of the power function is needed, to convert a linear color value into a nonlinear color value. A value $\gamma$ of gamma may be determined based on an optical-electro transfer curve of color space.

For color space (color space), colors may be different perceptions of eyes for light rays having different frequencies, or may represent objectively existing light having different frequencies. The color space is a color range defined by a coordinate system that is established by people to represent colors. Color gamut and a color model define color space together. The color model is an abstract mathematical model that represents a color by using a group of color components. The color model may include, for example, a red green blue (red green blue, RGB) mode and a printing cyan magenta yellow black (cyan magenta yellow key plate, CMYK) mode. The color gamut is a sum of colors that can be generated by a system. For example, Adobe RGB and sRGB are different color space based on an RGB model. Each device like a display or a printer has color space of the device, and can generate colors only in color gamut of the device. When an image is transferred from one device to another device, colors of the image may change on different devices because each device converts the image based on color space of the device and displays RGB or CMYK.

RGB space is space in which a video signal is quantitatively represented by luminance of red, green, and blue. YCC space is color space representing separation of luminance and chrominance. Three components of a YCC-space video signal respectively represent luminance-chrominance-chrominance. Common YCC-space video signals include YUV, YCbCr, ICtCp, and the like.

To obtain an image with a higher dynamic range, a bit width of the image is usually greater than or equal to 10 bits (bits). Common HDR-supported coding standards include H.266, H.265, and high efficiency image file format (high efficiency image file format, HEIF). Common joint photographic experts group (joint photographic experts group, JPEG) and H.264 support only 8-bit coding, and therefore cannot support an HDR video and HDR image well.

The HDR image or HDR video may need to be transcoded during delivery or transmission. In a current HDR transcoding solution, the HDR image or HDR video is directly transcoded. After the HDR image or HDR video is decoded, an HDR pixel value, and an HDR format identifier and information are obtained. The HDR pixel value usually needs to be processed (for example, image upsampled/downsampled, and enhanced). The HDR format identifier and information, and a processed HDR pixel value are then sent to an encoder for re-encoding. A re-encoded HDR image or HDR video is delivered to another device. Such a solution of directly transcoding the HDR image or HDR video (which may be referred to as a "single-layer transcoding solution") may cause an exception to a transcoded HDR image or HDR video, affecting user experience. Because when transcoding is (decoding and then re-encoding are) performed on the HDR bitstream obtained through single-layer encoding, a transcoding system needs to correctly send all HDR information obtained by a decoder for encoding. If information is lost, the transcoding system fails to perform re-encoding in a correct format. As a result, an incorrect bitstream is generated, and abnormal visual effect occurs when a user watches, severely affecting user experience. Currently, many delivery and transcoding systems on the market are not upgraded to support correct sending of HDR information from a decoding side to an encoding side. Mainstream mobile phone and application manufacturers receive many user complaints in this aspect.

For ease of description, a term "HDR object" is used in some embodiments of this application. The HDR object may be a static HDR image (which may also be referred to as an HDR image, an HDR photo, an HDR picture, or the like), may be an HDR video or another type of dynamic HDR image, or may be a frame of image in the HDR video or dynamic HDR image.

It may be understood that for ease of description, in some embodiments of this application, the technical solutions of this application are described by using an HDR image as an example. However, it may be understood that these embodiments may be applied not only to the HDR image, but also to another HDR object, for example, an HDR video, a dynamic HDR image, or a frame of image in the HDR video or dynamic HDR image.

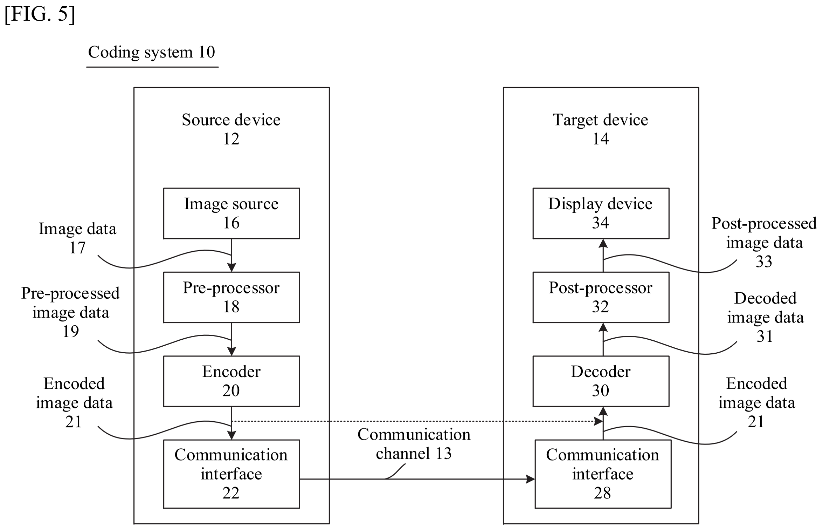

The following describes, with reference to FIG. 5, a coding system to which this application is applied. FIG. 5 is a block diagram of a coding system to which an embodiment of this application is applied. For example, a video coding system 10 (or a coding system 10 for short) to which a technology of this application may be used. A video encoder 20 (or an encoder 20 for short) and a video decoder 30 (or a decoder 30 for short) of the video coding system 10 represent devices that may be configured to perform techniques in accordance with various examples described in this application.

As shown in FIG. 5, the coding system 10 includes a source device 12. The source device 12 is configured to provide encoded data such as encoded image data 21 to a target device 14 for decoding the encoded data.

The source device 12 includes the encoder 20. Optionally, the source device 12 may further include an image source 16, a pre-processor 18 (or pre-processing unit), and a communication interface or communication unit 22.

The image source 16 may include or be any type of image capture device, for example, for capturing a real-world image, and/or any type of an image generating device, for example, a computer graphics processing unit for generating a computer animated image, or any type of device for obtaining and/or providing a real-world image, a computer-generated image (for example, screen content, a virtual reality (virtual reality, VR) image) and/or any combination thereof (for example, an augmented reality (augmented reality, AR) image). The image source may be any type of memory or storage storing any of the foregoing images.

To distinguish processing performed by the pre-processor 18 or the pre-processing unit 18, an image or image data 17 may also be referred to as an original image or original image data 17.

The pre-processor 18 is configured to: receive the (original) image data 17, and perform pre-processing on the image data 17, to obtain pre-processed image data 19 or pre-processed image data 19. For example, pre-processing performed by the pre-processor 18 may include trimming, color format conversion (for example, conversion from RGB to YCbCr), color correction, or de-noising. It may be understood that the pre-processing unit 18 may be optional component.

The video encoder 20 is configured to: receive the pre-processed image data 19 and provide encoded image data 21.

The communication interface 22 of the source device 12 may be configured to: receive the encoded image data 21 and send the encoded image data 21 (or any randomly processed version thereof) over a communication channel 13 to another device, for example, the target device 14 or any other device, for storage or reconstruction.

The target device 14 includes the decoder 30 (for example, the video decoder 30). In addition, the target device optionally includes a communication interface or communication unit 28, a post-processor 32 (or post-processing unit 32) and a display device 34.

The communication interface 28 of the target device 14 is configured to: directly receive, from the source device 12 or another source device like a storage device, the encoded image data 21 (or any randomly processed version thereof), for example, the storage device is an encoded image data storage device; and provide the encoded image data 21 to the decoder 30.

The communication interface 22 and the communication interface 28 may be configured to send or receive the encoded image data 21 or encoded data over a direct communication link between the source device 12 and the target device 14, for example, a direct wired or wireless connection, or over any type of network, for example, a wired or wireless network or any combination thereof, or any type of private and public network, or any kind of combination thereof. For example, the communication interface 22 may be configured to: package the encoded image data 21 into an appropriate format, for example, a packet, and/or process the encoded image data using any type of transmission encoding or processing for transmission via a communication link or communication network. The communication interface 28, forming the counterpart of the communication interface 22, may be, for example, configured to receive: the transmitted data and process the transmitted data using any type of corresponding transmission decoding or processing and/or de-packaging, to obtain the encoded image data 21. The communication interface 22 and the communication interface 28 each may be configured as a unidirectional communication interface indicated by an arrow corresponding to the communication channel 13 pointing from the source device 12 to the target device 14 shown in FIG. 5, or a bidirectional communication interface; and may be configured to transmit and receive a message and the like, to establish a connection, confirm and exchange any other information related to the communication link and/or data transmission such as transmission of the encoded image data.

The decoder 30 is configured to: receive the encoded image data 21, and provide decoded image data 31 or a decoded image 31.

The post-processor 32 of the target device 14 is configured to post-process the decoded image data 31 (also referred to as reconstructed image data), for example, the decoded image, to obtain post-processed image data 33, for example, a post-processed image. Post-processing performed by the post-processor 32 may include, for example, color format conversion (for example, conversion from YCbCr to RGB), color correction, trimming, or re-sampling, or any other processing, for example, for generating the decoded image data 31 for display, for example, by the display device 34.

The display device 34 of the target device 14 is configured to receive the post-processed image data 33 for displaying the image to a user, viewer, or the like. The display device 34 may be or include any type of display for representing the reconstructed image, for example, an integrated or external display screen or display. For example, the display screen may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS) display, a digital light processor (digital light processor, DLP), or any type of other display screens.

Although FIG. 5 shows the source device 12 and the target device 14 as separate devices, a device embodiment may alternatively include both the source device 12 and the target device 14 or functions of both the source device 12 and the target device 14, namely, the source device 12 or corresponding functions and the target device 14 or corresponding functions. In such embodiments, the source device 12 or corresponding functions and the target device 14 or corresponding functions may be implemented using the same hardware and/or software or by separate hardware and/or software or any combination thereof.

As will be apparent for the skilled person based on the description, the existence and (exact) split of functions of the different units or functions within the source device 12 and/or target device 14 as shown in FIG. 5 may vary depending on the actual device and application.

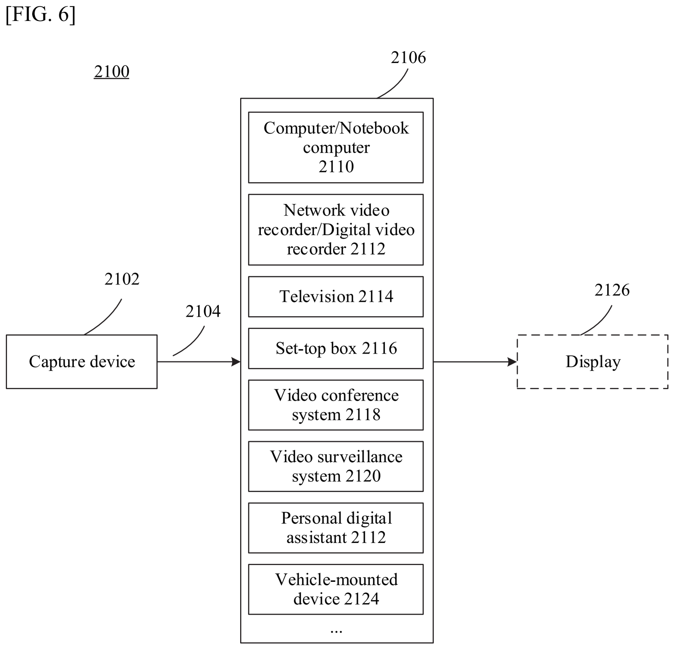

The following describes, with reference to FIG. 6, a content supply system for a content delivery service to which this application is applied. FIG. 6 is a block diagram of a content supply system for implementing a content delivery service to which an embodiment of this application is applied. This content supply system 2100 includes a capture device 2102, a terminal device 2106, and (optionally) a display 2126. The capture device 2102 communicates with the terminal device 2106 over a communication link 2104. The communication link may include the communication channel 13 described above. The communication link 2104 includes but not limited to Wi-Fi, Ethernet, wired, wireless (3G/4G/5G), USB, or any kind of combination thereof.

The capture device 2102 may encode captured data by using an encoding method shown in embodiments of this application. Alternatively, the capture device 2102 may deliver the captured data to a streaming media server (not shown in the figure), and the server encodes the data and transmits encoded data to the terminal device 2106. The capture device 2102 includes but is not limited to a camera, a smartphone or a tablet computer, a computer or a notebook computer, a video conference system, a personal digital assistant (personal digital assistant, PDA), a vehicle-mounted device, or any combination thereof. In some embodiments, the capture device 2102 may include the source device 12.

The terminal device 2106 of the content supply system 2100 receives and then generates decoded data. The terminal device 2106 may be a device with data receiving and restoration capabilities, like a smartphone or tablet computer, a computer/notebook computer 2110, a network video recorder (network video recorder, NVR)/digital video recorder (digital video recorder, DVR) 2112, a television 2114, a set-top box (set-top box, STB) 2116, a video conference system 2118, a video surveillance system 2120, a personal digital assistant 2122, a vehicle-mounted device 2124, any combination thereof, or such a device capable of decoding the encoded data. In some embodiments, the terminal device 2106 may include the target device 14. The terminal device 2106 may decode the received data. In some embodiments, the terminal device 2106 may be a video play application, a streaming media play application, a streaming media play platform, a live streaming platform, or the like that runs on the terminal device.

For the terminal device with a display, for example, the smartphone or tablet computer, the computer or notebook computer 2110, the NVR/DVR 2112, the television 2114, the PDA 2122, or the vehicle-mounted device 2124, the terminal device can send the decoded data to the display of the terminal device. For the terminal device without display, for example, the STB 2116, the video conference system 3118, or the video surveillance system 2120, the device is connected to the external display 2126, to receive and display the decoded data.

When each device in this system performs encoding or decoding, an image encoding device or an image decoding device, as shown in the foregoing embodiments of this application, can be used.

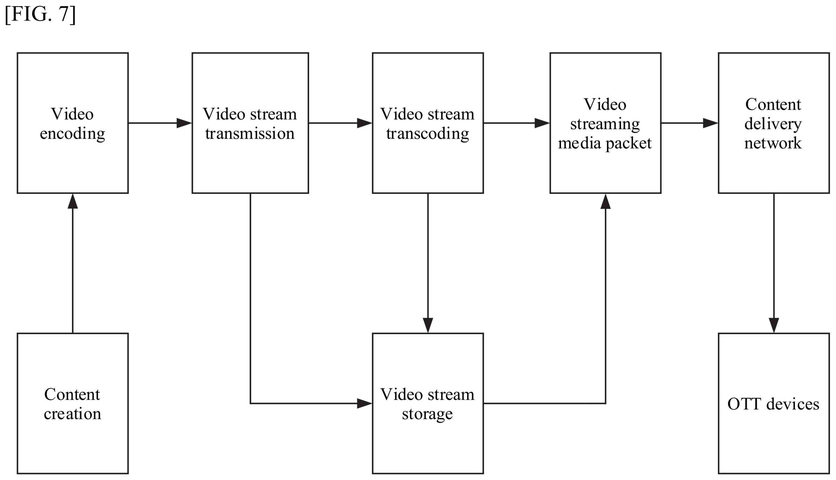

The following describes, with reference to FIG. 7, a streaming media system to which an embodiment of this application is applicable. FIG. 7 is a diagram of an operating procedure of a streaming media system to which an embodiment of this application is applicable.

The streaming media system includes a content creation module, which generates required content data, for example, a video or audio. The streaming media system further includes a video encoding module, which encodes generated content via an encoder. The streaming media system further includes a video stream transmission module, to transmit an encoded video in a form of a bitstream. Optionally, a format of a video stream may be converted into a bitstream format of a transport protocol commonly used by an OTT (over-the-top) device. For example, the protocol includes but is not limited to the real-time streaming protocol (Real-time Streaming Protocol, RTSP), the hypertext transfer protocol (Hypertext Transfer Protocol, HTTP), the HTTP live streaming protocol (HTTP Live streaming protocol, HLS), the MPEG dynamic adaptive streaming over HTTP (MPEG Dynamic Adaptive Streaming over HTTP, MPEG-DASH), the real-time transport protocol (Real-time Transport protocol, RTP), the real-time messaging protocol (Real-time Messaging Protocol, RTMP), or any combination thereof. Optionally, video stream storage may be performed to store an original format of the video stream and/or a plurality of converted bitstream formats, for ease of use. Further, the streaming media system further includes a video stream packaging module, configured to package the video stream to generate a packaged video stream. The packaged video stream may be referred to as a video streaming media packet. For example, the video streaming media packet may be generated based on a transcoded video stream or the stored video stream. Further, the streaming media system further includes a content delivery network (content distribution network, CDN), and the CDN is configured to deliver the video streaming media packet to a plurality of OTT devices, such as mobile phones, computers, tablets, and home projectors.

It should be noted that video encoding, video stream transmission, video stream transcoding, video stream storage, video streaming media packet generation, and the content delivery network may all be implemented on a cloud server.

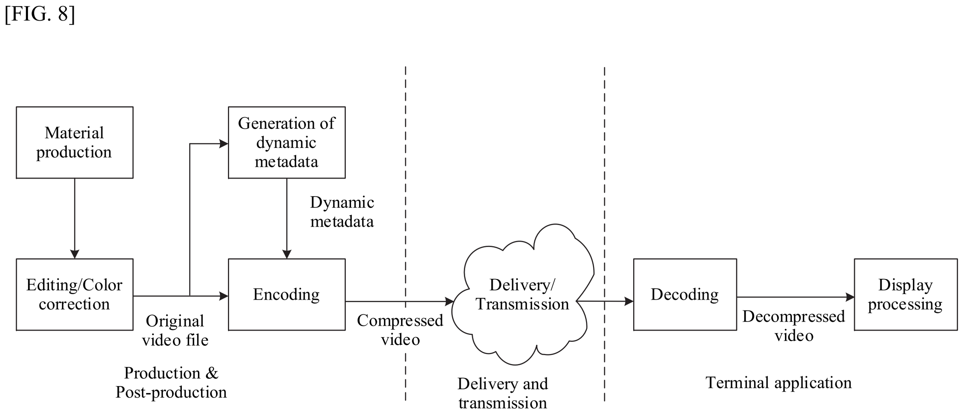

The following describes a diagram of an example of an end-to-end process in this application with reference to FIG. 8.

As shown in FIG. 8, an original video file (which may also be referred to as a master file) is obtained through procedures such as material production (for example, video shooting or computer graphics (computer graphics, CG) video production), editing, and color correction. Then, corresponding dynamic metadata is obtained based on the original video file. After the original video file and the dynamic metadata are encoded, a compressed video is obtained. The compressed video is delivered/transmitted to a terminal device (for example, a computer, a set-top box, a mobile phone, or a tablet computer). The terminal device decodes the compressed video to obtain a decompressed video, and then displays the decompressed video to a user on a display device (for example, a display or a television).

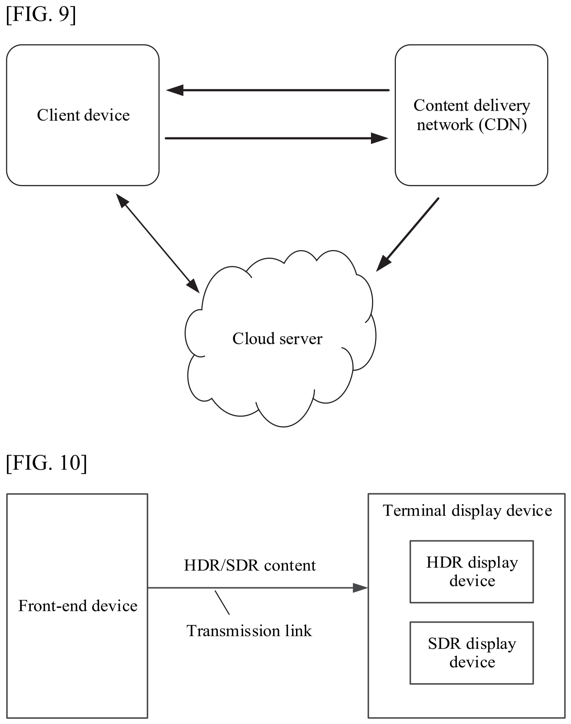

The following describes, with reference to FIG. 9, an example architecture of a streaming media system in this application. The architecture of the streaming media system includes a client device, a content delivery network, and a cloud server.

A user on the client device sends a play or playback request to a cloud platform.

The cloud platform makes a decision, responds to the client device, and sends, to the client device, an address that is of content requested by a client and that is on the CDN.

Then, the client device requests, from the CDN according to the address, the content to be played, and the CDN provides the content for the client device, and finally completes the request of the client device.

The following describes, with reference to FIG. 10, a system architecture to which embodiments of this application are applicable. FIG. 10 is a diagram of a possible system architecture to which an embodiment of this application is applicable. The system architecture in this embodiment of this application includes a front-end device, a transmission link and a terminal display device.

The front-end device is configured to collect or produce HDR/SDR content (for example, an HDR/SDR video or image).

In a possible embodiment, the front-end device may be further configured to extract corresponding metadata from the HDR content. The metadata may include global mapping information, local mapping information, and dynamic metadata and static metadata that correspond to the HDR content. The front-end device may send the HDR content and the metadata to the terminal display device over the transmission link. Specifically, the HDR content and the metadata may be transmitted in a form of one data packet, or separately transmitted in two data packets. This is not specifically limited in this embodiment of this application.

Optionally, the terminal display device may be configured to receive the metadata and HDR content, obtain, based on the global mapping information and local mapping information that are included in the corresponding metadata extracted from the HDR content, and information about the terminal display device, a mapping curve for global tone mapping and local tone mapping on the HDR content, convert the HDR content into display content adapted to an HDR display device or an SDR device in the terminal display device, and display the display content. It should be understood that, in different embodiments, the terminal display device may include a display device having a display capability with a lower dynamic range or a higher dynamic range than the HDR content generated by the front-end device. This is not limited in this application.

Optionally, in this application, the front-end device and the terminal display device may be independent and different physical devices. For example, the front-end device may be a video capture device, or may be a video production device. The video capture device may be a device like a digicam, a camera, or an image drawing machine. The terminal display device may be a device having a video play function, like virtual reality (virtual reality, VR) glasses, a mobile phone, a tablet, a television, or a projector.

Optionally, the transmission link between the front-end device and the terminal display device may be a wireless connection or a wired connection. The wireless connection may use technologies such as long-term evolution (long-term evolution, LTE), 5th generation (5th generation, 5G), and future mobile communication. The wireless connection may further include technologies such as wireless fidelity (wireless-fidelity, Wi-Fi), Bluetooth, and near field communication (near field communication, NFC). The wired connection may include an Ethernet connection, a local area network connection, and the like. This is not specifically limited.

In this application, functions of the front-end device and functions of the terminal display device may be alternatively integrated into a same physical device, for example, a terminal device having a video shooting function, like a mobile phone or a tablet. In this application, a part of the functions of the front-end device and a part of the functions of the terminal display device may be alternatively integrated into a same physical device. This is not specifically limited.

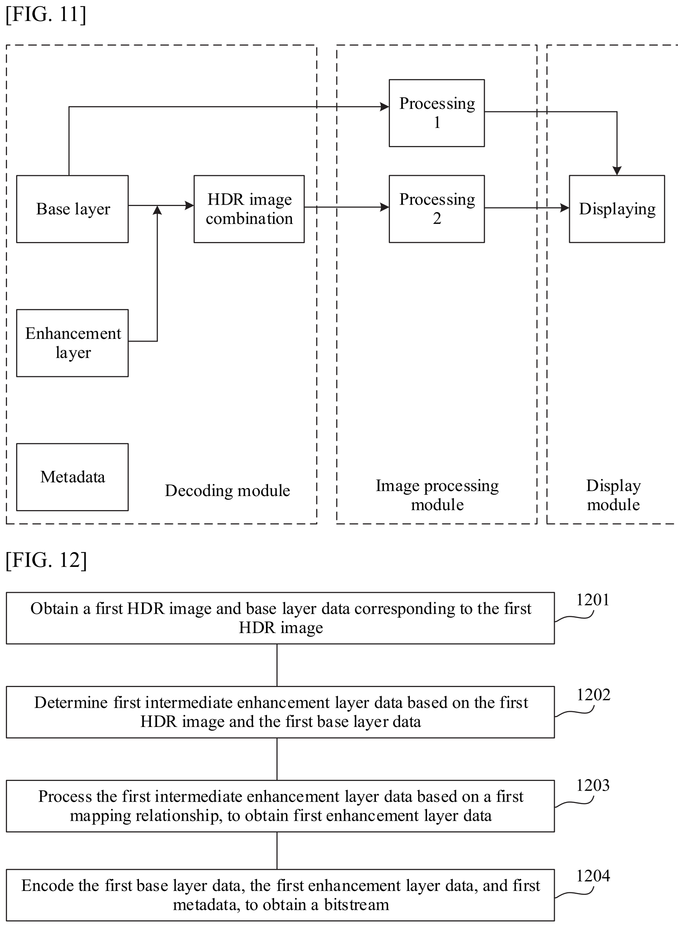

FIG. 11 is a diagram of a digital signal processing method according to an embodiment of this application. As shown in FIG. 11, the digital signal processing method provided in this embodiment of this application may be applied to a decoding side.

A decoding module (which may also be referred to as a decoder) may obtain base layer data, enhancement layer data, and metadata from a received bitstream. Then, the decoding module may combine the base layer data and the enhancement layer data to obtain an HDR image.

A graphics processing module may process the HDR image. The graphics processing module may further process the base layer data. The graphics processing module may send a processed HDR image and processed base layer data to a display module.

The display module may present an HDR image based on the received data (namely, the processed HDR image and the processed base layer data).

For ease of description, the HDR image obtained by the decoding module based on the base layer data and the enhancement layer data may be referred to as an HDR image 1, the HDR image obtained after the graphics processing module processes the HDR image 1 may be referred to as an HDR image 2, and the HDR image displayed by the display module may be referred to as an HDR image 3.

The base layer data may also be referred to as a base layer image, a base image, or a basic image, and may be an SDR image or an HDR image with a low dynamic range.

The enhancement layer data may also be referred to as enhancement data, an enhancement layer image, or an enhancement image, and may include some image detail information. In this way, the base layer data is supplemented by using the image detail information included in the enhancement layer data, to combine an HDR image (namely, the HDR image 1 mentioned above) with better contrast.

The dynamic range of the base layer data is lower than a dynamic range of the HDR image (namely, the HDR image 1) determined based on the base layer data and the enhancement layer data.

For example, in some embodiments, the base layer data may be an SDR image, and the HDR image 1 is an HDR image.

For another example, in some other embodiments, the base layer data may be an HDR image, but a dynamic range of the HDR image is lower than a dynamic range of the HDR image 1.

For example, it is assumed that the dynamic range of the base layer data is from $DR_{x1}$ to $DR_{x2}$, and the dynamic range of the HDR image 1 is from $DR_{y1}$ to $DR_{y2}$. In some embodiments, $DR_{y1}$ is less than $DR_{x1}$, and $DR_{y2}$ is greater than $DR_{x2}$. In some other embodiments, $DR_{y1}$ is less than $DR_{x1}$, and $DR_{y2}$ is equal to $DR_{x2}$. In some other embodiments, $DR_{y1}$ is equal to $DR_{x1}$, and $DR_{y2}$ is greater than $DR_{x2}$. In other words, it may be considered that the base layer data is an image whose dynamic range is lower than that of the HDR image 1.

FIG. 12 is a schematic flowchart of an encoding method according to an embodiment of this application. The method shown in FIG. 12 may be performed by an electronic device or a component (for example, a chip or a system on chip (system on chip, SoC)) of the electronic device. The electronic device may be the source device 12 shown in FIG. 5, the capture device 2102 shown in FIG. 6, or the front-end device shown in FIG. 10. For ease of description, in the following embodiment, it is assumed that the method shown in FIG. 12 is performed by the electronic device. An embodiment of this application further provides a decoding method. The decoding method may be performed by an electronic device or a component (for example, a chip or a SoC) of the electronic device. The electronic device may be the target device 14 shown in FIG. 5, the terminal device 2106 shown in FIG. 6, or the terminal display device shown in FIG. 10. In some embodiments, to distinguish between the electronic device that performs the encoding method and an electronic device that performs the decoding method, the electronic device that performs encoding may be referred to as a first electronic device, and the electronic device that performs the decoding method may be referred to as a second electronic device.

1201: Obtain a first HDR image and base layer data corresponding to the first HDR image.

1202: Determine first intermediate enhancement layer data based on the first HDR image and the first base layer data.

Optionally, in some embodiments, determining the first intermediate enhancement layer data based on the first HDR image and the first base layer data includes: determining second base layer data based on the first base layer data; and determining the first intermediate enhancement layer data based on the first HDR image and the second base layer data.

Optionally, in some embodiments, the first base layer data may be the same as the second base layer data.

Optionally, in some other embodiments, the first base layer data may be processed based on a second mapping relationship, to obtain the second base layer data.

Optionally, in some other embodiments, the second base layer data may be determined based on intermediate base layer data, and the intermediate base layer data may be determined based on the first base layer data.

Optionally, in some embodiments, the intermediate base layer data may be the same as the first base layer data.

Optionally, in some other embodiments, the first base layer data may be encoded to obtain first base layer encoding information, and the first base layer encoding information is decoded to obtain first base layer decoding information, where the intermediate base layer data is the first base layer decoding information.

In some embodiments, the second base layer data is the same as the intermediate base layer data.

In some other embodiments, at least one feature value (which may be referred to as base layer feature value) of the intermediate base layer data may be further determined, and then the second base layer data is determined based on the at least one base layer feature value. A base layer feature value may include a maximum value, a minimum value, or a median value of a pixel of the intermediate base layer data. When the at least one base layer feature value is determined, the at least one base layer feature value may be mapped to at least one value (which may be referred to as a base layer reference value) to obtain the second base layer data. The at least one base layer feature value one-to-one corresponds to the at least one base layer reference value. The second base layer data includes the at least one base layer reference value.

In some other embodiments, at least one feature luminance value may be further determined based on the first HDR image; at least one pixel is determined from the intermediate base layer data, where the at least one pixel one-to-one corresponds to the at least one feature luminance value, and a location of each pixel in the at least one pixel is the same as a location of a corresponding feature luminance value; the second mapping relationship is determined based on the at least one feature luminance value and a value of the at least one pixel; and the intermediate base layer data is processed based on the second mapping relationship, to obtain the second base layer data.

As described above, in some embodiments, the intermediate base layer data may be the same as the first base layer data. In this case, the intermediate base layer data in the foregoing embodiment may be replaced with the first base layer data. For example, in some embodiments, at least one feature luminance value may be determined based on the first HDR image; at least one pixel is determined from the first base layer data, where the at least one pixel one-to-one corresponds to the at least one feature luminance value, and a location of each pixel in the at least one pixel is the same as a location of a corresponding feature luminance value; the second mapping relationship is determined based on the at least one feature luminance value and a value of the at least one pixel; and the first base layer data is processed based on the second mapping relationship, to determine the second base layer data.

A form of the second mapping relationship is not limited in embodiments of this application. For example, in some embodiments, the second mapping relationship may be in a form of a sigmoid curve, a cubic spline curve, a gamma curve, a linear curve, a piecewise curve, or the like, or in a form of an inverse function thereof. For another example, in some embodiments, the second mapping relationship may be a curve. For example, the following curve may be used:

$$L' = F(L) = a \times \left( \frac{p \times L^n}{(p-1) \times L^n + 1} \right)^m + b$$

Alternatively, the second mapping relationship is an inverse curve of the curve. L and L' may be normalized optical signals or electrical signals. This is not limited in embodiments of this application.

Optionally, in some embodiments, determining the at least one feature luminance value based on the first HDR image includes: determining a luminance value at a peak location in a histogram of the first HDR image as the feature luminance value.

Optionally, in some embodiments, determining the at least one feature luminance value based on the first HDR image includes: determining at least one reference region in the first HDR image; and determining a reference luminance value of each reference region in the at least one reference region as the feature luminance value, where the reference luminance value of each reference region is an average luminance value or a maximum luminance value of the reference region.

The reference region may be a region including preset or specified content or objects. For example, the reference region may be a region including a face, a region including green plants, a region including the blue sky, or the like.

Optionally, in some embodiments, the intermediate base layer data and the second base layer data may satisfy the following relationship:

$$\text{baseAfter}[i] = \text{TMB}_2(\text{R}_{\text{base}[i]\_1}) \text{ (Formula 1.1)}$$

Herein, baseAfter[i] represents a value of an $i^{\text{th}}$ pixel in the second base layer data, $\text{R}_{\text{base}[i]\_1}$ represents a value of an $i^{\text{th}}$ pixel in the intermediate base layer data or a first reference value, $\text{TMB}_2(\ )$ represents the second mapping relationship, and the first reference value is determined based on the value of the $i^{\text{th}}$ pixel in the intermediate base layer data.

Optionally, in some other embodiments, the intermediate base layer data and the second base layer data may satisfy the following relationship:

$$\text{baseAfter}[i] = \text{TMB}_2(\text{Rbase}_{[i]\_2}) \times \text{Rbase}_{[i]\_3} \text{ (Formula 1.2)}$$

Herein, baseAfter[i] represents a value of an $i^{\text{th}}$ pixel in the second base layer data, $\text{TMB}_2(\ )$ represents the second mapping relationship, $\text{R}_{\text{base}[i]\_2}$ is a value of an $i^{\text{th}}$ pixel in the intermediate base layer data or a second reference value, the second reference value is determined based on the value of the $i^{\text{th}}$ pixel in the intermediate base layer data, $\text{R}_{\text{base}[i]\_3}$ is the value of the $i^{\text{th}}$ pixel in the intermediate base layer data or a third reference value, and the third reference value is determined based on the value of the $i^{\text{th}}$ pixel in the intermediate base layer data.

Optionally, in some other embodiments, the intermediate base layer data and the second base layer data may satisfy the following relationship:

$$\text{baseAfter}[i] = \text{TMB}_2(\ ) \times \text{Rbase}_{[i]\_4} \text{ (Formula 1.3)}$$

Herein, baseAfter[i] represents a value of an $i^{\text{th}}$ pixel in the second base layer data, $\text{TMB}_2(\ )$ represents the second mapping relationship, $\text{Rbase}_{[i]\_4}$ is a value of an $i^{\text{th}}$ pixel in the intermediate base layer data or a fourth reference value, and the fourth reference value is a reference value, of the $i^{\text{th}}$ pixel, determined based on the value of the $i^{\text{th}}$ pixel in the intermediate base layer data.

As described above, in some embodiments, the first base layer data is the same as the intermediate base layer data. Therefore, a relationship between the first base layer data and the second base layer data may also satisfy Formula 1.1, Formula 1.2, or Formula 1.3. In this case, $\text{R}_{\text{base}[i]\_1}$ in Formula 1.1 represents a value of an $i^{\text{th}}$ pixel in the first base layer data or a first reference value, and the first reference value is determined based on the value of the $i^{\text{th}}$ pixel in the first base layer data. $\text{R}_{\text{base}[i]\_2}$ in Formula 1.2 is a value of an $i^{\text{th}}$ pixel in the first base layer data or a second reference value, the second reference value is a second reference value, of the $i^{\text{th}}$ pixel, determined based on the value of the $i^{\text{th}}$ pixel in the first base layer data, and $\text{R}_{\text{base}[i]\_3}$ is the value of the $i^{\text{th}}$ pixel in the first base layer data or a third reference value, and the third reference value is determined based on the value of the $i^{\text{th}}$ pixel in the first base layer data. $\text{Rbase}_{[i]\_4}$ in Formula 1.3 is a value of an $i^{\text{th}}$ pixel in the first base layer data or a fourth reference value, and the fourth reference value is a reference value, of the $i^{\text{th}}$ pixel, determined based on the value of the $i^{\text{th}}$ pixel in the first base layer data.

In some embodiments, the second mapping relationship may further include at least one piece of filter information. The first base layer data or intermediate base layer data is filtered based on the at least one piece of filter information, to obtain the second base layer data.

When the second base layer data is determined, the first intermediate enhancement layer data may be determined based on the first HDR image and the second base layer data.

Optionally, in some embodiments, the second base layer data may be processed based on a target conversion function, to obtain a converted result. The first intermediate enhancement layer data is determined based on the first HDR image and the converted result.

Optionally, in some embodiments, the first intermediate enhancement layer data is a quotient of data of the first HDR image and the converted result.

Optionally, in some embodiments, the first intermediate enhancement layer data is a difference between the data of the first HDR image and the converted result.

If baseAfter[i] represents the value of the i$^{th}$ pixel in the second base layer data, and f( ) represents the target conversion function, the converted result may be represented by f(baseAfter[i]). If $HDR_1$[i] represents a value of an i$^{th}$ pixel of the first HDR image, and MidEnhance[i] represents the value of the i$^{th}$ pixel in the first intermediate enhancement layer data, in some embodiments, MidEnhance[i], $HDR_1$[i], and f(baseAfter[i]) may satisfy the following relationship:

$$\mathrm{MidEnhance[i]}=\mathrm{HDR_1[i]}/\mathrm{f(baseAfter[i])}\ \text{(Formula 2.1)}$$

In some other embodiments, MidEnhance[i], $HDR_1$[i], and f(baseAfter[i] may satisfy the following relationship:

$$\mathrm{MidEnhance[i]}=\mathrm{HDR_1[i]}-\mathrm{f(baseAfter[i])}\ \text{(Formula 2.2)}$$

The target conversion function f( ) is not limited in embodiments of this application. For example, in some embodiments, the target conversion function may be log, OETF, EOTF, a piecewise curve, or the like. For another example, in some embodiments, f(baseAfter[i])=baseAfter[i]. For another example, in some other embodiments, f(baseAfter[i])=A×baseAfter[i], where the parameter A may be a preset value or may be a value determined based on baseAfter[i]. For another example, in some other embodiments, f(baseAfter[i])=baseAfter[i]+B, where the parameter B may be a preset value or a value determined based on baseAfter[i].

In some other embodiments, the second mapping relationship may alternatively be directly determined from a plurality of mapping relationships (for example, numerical mapping relationships, sigmoid curves, cubic spline curves, gamma curves, linear curves, piecewise curves, or the like, or an inverse function thereof).

In some other embodiments, the second mapping relationship may alternatively be a preset or pre-negotiated mapping relationship.

When the second mapping relationship is determined by the first electronic device, the second mapping relationship may be further indicated to the second electronic device by using metadata.

Optionally, in some embodiments, before the second base layer data is processed based on the target conversion function, the second base layer data may further be preprocessed, to obtain preprocessed second base layer data. Then, the preprocessed second base layer data is processed based on the target conversion function.

For example, the preprocessing may be obtaining a data range (a minimum value and/or a maximum value) of the second base layer data, mapping the minimum value of the second base layer data to a preset value, mapping the maximum value to a preset value, and/or mapping an intermediate value to an intermediate value based on a mapping relationship of the maximum value or a mapping relationship of the minimum value.

For another example, the preprocessing may be performing normalization processing on the second base layer data.

In some embodiments, a preprocessing method may be preset or pre-negotiated.

In some other embodiments, the preprocessing method may be determined by the first electronic device. In this case, the preprocessing method may be further indicated to the second electronic device by using metadata.

1203: Process the first intermediate enhancement layer data based on a first mapping relationship, to obtain first enhancement layer data.

Optionally, in some embodiments, downsampling may be first performed on the first intermediate enhancement layer data to obtain second intermediate enhancement layer data, and then the second intermediate enhancement layer data is processed based on the first mapping relationship, to obtain the first enhancement layer data.

Optionally, in some other embodiments, the downsampling may not need to be performed on the first intermediate enhancement layer data. In this case, the first intermediate enhancement layer data may be directly processed based on the first mapping relationship, to obtain the first enhancement layer data. In other words, it may also be considered that the first intermediate enhancement layer data is equal to the second intermediate enhancement layer data.

In some embodiments, a target interpolation manner may be determined, and the downsampling is performed on the first intermediate enhancement data by using the target interpolation manner.

Optionally, in some embodiments, the target interpolation manner may be determined from a plurality of interpolation manners. The target interpolation manner may be an optimal interpolation manner in the plurality of interpolation manners. It is assumed that there are K interpolation manners (K is a positive integer greater than or equal to 2). The downsampling is performed on the first intermediate enhancement data by using the K interpolation manners, to obtain K interpolation results. Then, upsampling is performed on the K interpolation results by using the K interpolation manners, to obtain K pieces of restored data. The K pieces of restored data are compared with the first intermediate enhancement data, to determine restored data that has a minimum difference from the first intermediate enhancement data. An interpolation manner used to determine the restored data with the minimum difference is the optimal interpolation manner, namely, the target interpolation manner. In other words, a difference between the first intermediate enhancement data and restored data obtained after the upsampling is performed on the second intermediate enhancement data based on the target interpolation manner is less than a difference between the first intermediate enhancement data and restored data obtained after the upsampling is performed on reference intermediate enhancement data based on a reference interpolation manner, where the reference intermediate enhancement data is intermediate enhancement data obtained after the downsampling is performed on the first intermediate enhancement data based on the reference interpolation manner, and the reference interpolation manner is any interpolation manner other than the target interpolation manner in the plurality of interpolation manners.

Optionally, in some embodiments, the plurality of interpolation manners may include GL_NEAREST (nearest neighbor) and GL_LINEAR (nearest neighbor) of an OPENGL texture interpolation manner. In some other embodiments, the plurality of interpolation manners also include NEAREST (nearest neighbor) or LINEAR (nearest neighbor) of a Vulkan texture interpolation manner. In some other embodiments, the plurality of interpolation manners may include a plurality of groups of filters. In some other embodiments, the plurality of interpolation manners may include a plurality of directional interpolation manners or a bi-cubic spline. In some other embodiments, the plurality of interpolation manners may also include all the foregoing manners, a subset of the plurality of the foregoing manners or the foregoing one manner, or the like.

In some other embodiments, the target interpolation manner may be a preset interpolation manner. For example, the target interpolation manner may be a preset filter. For another example, in some other embodiments, the target interpolation manner may be a manner that includes a plurality of directional interpolations. For another example, in some other embodiments, the target interpolation manner may be a bi-cubic spline.

The first mapping relationship may be a numerical mapping relationship, a sigmoid curve, a cubic spline curve, a gamma curve, a linear curve, or a piecewise curve, or the like.

For example, the numerical mapping relationship may be a relationship between a specific data range and a data range of the second intermediate enhancement layer data. For example, the specific data range may include a first value and/or a second value, a maximum value of the second intermediate enhancement data is mapped to the first value, a minimum value of the second intermediate enhancement data is mapped to the second value, and/or an intermediate value of the second intermediate enhancement data is mapped to a value between the first value and the second value.

For another example, the numerical mapping relationship may be normalization. In other words, processing the second intermediate enhancement layer data based on the first mapping relationship, to obtain the first enhancement layer data may be performing normalization processing on the second intermediate enhancement data to obtain normalized second intermediate enhancement data. The normalized second intermediate enhancement layer data is the first enhancement layer data.

For another example, the first mapping relationship may be represented by using the following curve:

$$L' = F(L) = a \times \left( \frac{p \times L^n}{(p-1) \times L^n + 1} \right)^m + b$$

Alternatively, the first mapping relationship is an inverse curve of the curve. L and L' may be normalized optical signals or electrical signals. This is not limited in embodiments of this application.

In some other embodiments, the first mapping relationship may be further determined based on a histogram of the second intermediate enhancement data. For example, the histogram of the second intermediate enhancement data may be obtained, for example, the first mapping relationship may be obtained by using a histogram equalization method.

Optionally, in some embodiments, the first mapping relationship may further include at least one piece of filter information. The second intermediate enhancement layer data is filtered based on the at least one piece of filter information, to obtain the first enhancement layer data.

Optionally, in some embodiments, the second intermediate enhancement layer data and the first enhancement layer data may satisfy the following relationship:

$$\text{EnhanceAfter[i]}=\text{TMB}_1(\text{RMidEnhance}_{[i]}) \text{ (Formula 3.1)}$$

Herein, EnhanceAfter[i] represents a value of an $i^{th}$ pixel in the first enhancement layer data, RMidEnhance$_{[i]}$ represents a value of an $i^{th}$ pixel in the second intermediate enhancement layer data or a reference value, TMB$_1$( ) represents the first mapping relationship, and the reference value is determined based on the value of the $i^{th}$ pixel in the second intermediate enhancement layer data.

Optionally, in some other embodiments, the second intermediate enhancement layer data and the first enhancement layer data may satisfy the following relationship:

$$\text{EnhanceAfter[i]}=\text{TMB}_1(\ )\times\text{RMidEnhance}_{[i]} \text{ (Formula 3.2)}$$

Herein, EnhanceAfter[i] represents a value of an $i^{th}$ pixel in the first enhancement layer data, TMB$_1$( ) represents the first mapping relationship, RMidEnhance$_{[i]\_4}$ is a value of an $i^{th}$ pixel in the second intermediate enhancement layer data or a reference value, and the reference value is a reference value, of the $i^{th}$ pixel, determined based on the value of the $i^{th}$ pixel in the second intermediate enhancement layer data.

It may be understood that if the downsampling is not performed on the first intermediate enhancement layer data, but the first intermediate enhancement layer data is directly processed based on the first mapping relationship to obtain the first enhancement layer data, the relationship between the first intermediate enhancement layer data and the first enhancement layer data may also satisfy Formula 3.1 or Formula 3.2. In this case, RMidEnhance$_{[i]}$ in Formula 3.1 and Formula 3.2 represents a value of an $i^{th}$ pixel in the first intermediate enhancement layer data or a reference value determined based on the value of the $i^{th}$ pixel in the first intermediate enhancement layer data.

Optionally, in some embodiments, the second intermediate enhancement layer data or the first intermediate enhancement layer data may be first converted into nonlinear domain data such as log, PQ, HLG, or gamma, and then the converted second intermediate enhancement layer data or first intermediate enhancement layer data is processed based on the first mapping relationship, to obtain the first enhancement layer data.

Optionally, in some other embodiments, after the second intermediate enhancement layer data or first intermediate enhancement layer data is processed based on the first mapping relationship, processed data is obtained, and then the processed data may be converted into nonlinear domain such as log, PQ, HLG, or gamma, to obtain the first enhancement layer data.

1204: Encode the first base layer data, the first enhancement layer data, and first metadata, to obtain a bitstream.

In some embodiments, the first metadata includes metadata of the first base layer data and metadata of the first enhancement layer data.

In some embodiments, the first metadata may include first mapping relationship indication information. The first mapping relationship indication information indicates information related to the first mapping relationship. For example, the first mapping relationship indication information may indicate any one or more of the following information: the first mapping relationship, a parameter of the first mapping relationship (for example, a first value and/or a second value in a numerical mapping relationship), a feature value (for example, a maximum value, a minimum value, and/or an intermediate value) of the second intermediate enhancement layer data or the first intermediate enhancement layer data, inverse mapping (which may be referred to as a "third mapping relationship") of the first mapping relationship, or a parameter of the third mapping relationship.

For example, in some embodiments, the first mapping relationship may be determined by the first electronic device from a plurality of mapping relationships. In this case, the first electronic device may indicate, by using the first mapping relationship indication information, the determined first mapping relationship to the second electronic device. The second electronic device may determine the third mapping relationship based on the first mapping relationship, and then process data in the received bitstream based on the third mapping relationship.

For another example, in some embodiments, the first mapping relationship may be determined by the first electronic device from a plurality of mapping relationships. In this case, the first electronic device may directly indicate, by using the first mapping relationship indication information, the third mapping relationship or the parameter of the third mapping relationship to the second electronic device. In this way, the second electronic device can directly determine the third mapping relationship, and does not need to determine the third mapping relationship based on the first mapping relationship.

For another example, in some embodiments, the parameter of the first mapping relationship may also be determined by the first electronic device. In this case, the first mapping relationship indication information may further indicate the parameter of the first mapping relationship. In some other embodiments, the parameter of the first mapping relationship may be preset or pre-negotiated. In this case, the first mapping relationship indication information may not carry the preset parameter or the pre-negotiated parameter.

For another example, in some embodiments, the first mapping relationship may be preset or pre-negotiated. In this case, the first mapping relationship indication information may not need to indicate the first mapping relationship or the third mapping relationship.

The first mapping relationship indication information may directly or indirectly indicate the foregoing information. For example, in some embodiments, the first mapping relationship indication information may directly carry the information related to the first mapping relationship. For another example, in some other embodiments, the first mapping relationship indication information may indicate the information related to the first mapping relationship by using an index.

For example, in some embodiments, different mapping relationships may have different indexes. The first mapping relationship indication information may include an index of the first mapping relationship.

For another example, different parameters of a same mapping relationship may correspond to different indexes. For example, an index 0001 corresponds to a numerical mapping relationship in which a first value and a second value are 0 and 1 respectively; and an index 0011 corresponds to a numerical mapping relationship in which a first value and a second value are -1 and 1 respectively.

For another example, in some other embodiments, the first mapping relationship indication information may include two indexes. The two indexes may be respectively referred to as a first index and a second index. The first index indicates the second mapping relationship, and the second index indicates a parameter of the second mapping relationship. For example, the first index is 001, and indicates that the second mapping relationship is a numerical mapping relationship. The second index is 01, and indicates that a first value is 0 and a second value is 1.

As described above, in some embodiments, the second mapping relationship used to determine the second base layer data may be determined by the first electronic device. In this case, the first metadata may include second mapping relationship indication information. The second mapping relationship indication information indicates information related to the second mapping relationship. For example, the second mapping relationship indication information may indicate any one or more of the following information: the second mapping relationship, the parameter of the second mapping relationship, a feature value (for example, a maximum value, a minimum value, and/or an intermediate value) of the intermediate base layer data, inverse mapping (which may be referred to as a "fourth mapping relationship") of the second mapping relationship, or a parameter of the fourth mapping relationship. Similar to the first mapping relationship indication information, the second mapping relationship indication information may directly or indirectly indicate the foregoing information.

As described above, in some embodiments, the second intermediate enhancement data is obtained by performing the downsampling on the first intermediate enhancement data. In this case, the first metadata may further include interpolation manner indication information, and the interpolation manner indication information indicates the target interpolation manner. In this way, the second electronic device can determine the target interpolation manner based on the interpolation manner indication information, and then perform the upsampling by using the target interpolation manner.

As described above, in some embodiments, before the second base layer data is processed based on the target conversion function, the second base layer data may further be preprocessed. When a preprocessing method is determined by the first electronic device, the first metadata may further include preprocessing indication information. The preprocessing indication information indicates the preprocessing method and a related parameter (for example, a maximum value and/or a minimum value) in preprocessing.

The first metadata may further carry some common information, for example, data of a data format, region division information, region traversal sequence information, an image feature, an encoding compression format, or a curve parameter, and one or more metadata information units. The metadata information units may include data such as coordinate information, image features, and curve parameters.

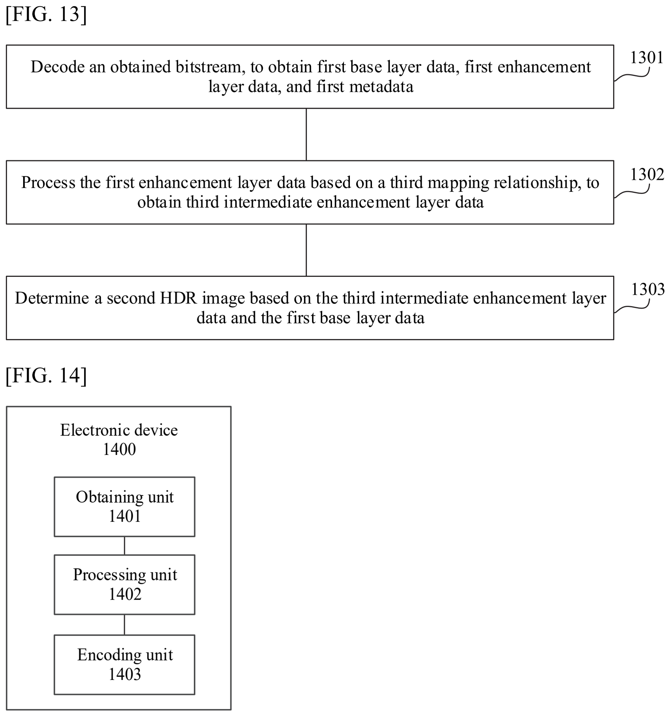

FIG. 13 is a schematic flowchart of a decoding method according to an embodiment of this application. The method shown in FIG. 13 may be performed by an electronic device or a component (for example, a chip or a SoC) of the electronic device. The electronic device may be the target device 14 shown in FIG. 5, the terminal device 2106 shown in FIG. 6, or the terminal display device shown in FIG. 10. For ease of description, in the following embodiment, it is assumed that the method shown in FIG. 13 is performed by the electronic device.

1301: Decode an obtained bitstream, to obtain first base layer data, first enhancement layer data, and first metadata.

The bitstream may be encoded by the encoding side device by using the method shown in FIG. 12. For ease of description, it is assumed that the method shown in FIG. 12 is performed by the first electronic device, and the method shown in FIG. 13 is performed by the second electronic device.

In some embodiments, the first electronic device and the second electronic device may be different electronic devices. For example, in some embodiments, after completing encoding, the first electronic device may send the bitstream to the second electronic device over a transmission link (for example, an optical fiber, Wi-Fi, or a 3G/4G/5G network). The second electronic device may receive the bitstream over the communication link. The first electronic device may also store the bitstream in a storage device (for example, a removable hard disk or a USB flash drive). The second electronic device may read the storage device to obtain the bitstream stored in the storage device.

In some other embodiments, the first electronic device and the second electronic device may be a same electronic device. For example, a smartphone may shoot a video by using a camera component, and then obtain corresponding first metadata based on an original video file. The original video file and the first metadata are encoded to obtain a bitstream. The bitstream is encapsulated into a video file and stored in an internal memory of the smartphone. The smartphone may read the video file and obtain the bitstream. In this case, both the first electronic device and the second electronic device are the smartphone.

An encapsulation location of the first metadata is determined by the first electronic device during encoding. For example, in some embodiments, if the bitstream is obtained through encoding based on high efficiency video coding (high efficiency video coding, HEVC) or versatile video coding (versatile video coding, VVC), the second electronic device may obtain the first metadata from supplement enhancement information (supplement enhancement information, SEI) of the HEVC or the VVC. For another example, in some embodiments, if the bitstream is obtained through encoding based on advanced video coding (advanced video coding, AVC)/H.264, the second electronic device may obtain the first metadata from a user-defined network abstraction layer (network abstraction layer, NAL) unit or a reserved packet unit. For another example, in some embodiments, the second electronic device may obtain the first metadata from app extension information encapsulated in a JPEG file interchange format (JPEG file interchange format). For another example, in some embodiments, the second electronic device may obtain the first metadata from a data segment encapsulated in moving picture experts group (moving picture experts group, MPEG)-4 part 14 (MPEG-4 part 14, MP4).

Content carried in the first metadata may be some common information, for example, data of a data format, region division information, region traversal sequence information, an image feature, an encoding compression format, or a curve parameter, and one or more metadata information units. The metadata information units may include data such as coordinate information, image features, and curve parameters.

A format of the first metadata is not limited in embodiments of this application. For example, the first metadata such as ST20114-40 includes histogram information and tone-mapping curve parameter information, or the first metadata such as ST20114-12 includes tone-mapping curve parameter information.

A bitstream format of a base layer data and an enhancement layer data (including the first enhancement layer data and second enhancement layer data mentioned below) is not limited in embodiments of this application. In terms of color space, the bitstream format may be YUV, RGB, Lab, HSV, or the like. In terms of a bit width of data, the bitstream format may be 8 bits, 10 bits, 12 bits, or the like. In terms of a numeric field, the bitstream format may be PQ, HLG, gamma, log, or the like.

A codec is not limited in embodiments of this application, and may be a codec like a JPEG codec, an HEIF codec, an H.264 codec, or an HEVC codec.

1302: Process the first enhancement layer data based on a third mapping relationship, to obtain third intermediate enhancement layer data.

The third mapping relationship may be one or more of a numerical mapping relationship, sigmoid, a cubic spline, gamma, a linear, a piecewise curve, or the like.

For example, the numerical mapping relationship may be a relationship between a specific data range and a data range of second intermediate enhancement layer data. For example, the specific data range may include a first value and/or a second value, a maximum value of the second intermediate enhancement data is mapped to the first value, a minimum value of the second intermediate enhancement data is mapped to the second value, and/or an intermediate value of the second intermediate enhancement data is mapped to a value between the first value and the second value.

For another example, the first mapping relationship may be represented by using the following curve:

$$L' = F(L) = a \times \left( \frac{p \times L^n}{(p-1) \times L^n + 1} \right)^m + b$$

Alternatively, the first mapping relationship is an inverse curve of the curve. L and L' may be normalized optical signals or electrical signals. This is not limited in embodiments of this application.

The third mapping relationship may be inverse mapping of the first mapping relationship. For example, if the first mapping relationship is normalization, the third mapping relationship is inverse normalization. In other words, if the first enhancement layer data is obtained by the first electronic device by performing normalization on the second intermediate enhancement layer data, the second electronic device may perform inverse normalization processing on the first enhancement layer data, to obtain the third enhancement layer data.

In some embodiments, the first metadata may include first mapping relationship indication information, and the first mapping relationship indication information indicates information related to the first mapping relationship. For example, the first mapping relationship indication information may indicate any one or more of the following information: the first mapping relationship, a parameter of the first mapping relationship, a feature value (for example, a maximum value, a minimum value, and/or an intermediate value) of the intermediate base layer data, inverse mapping (which may be referred to as the "third mapping relationship") of the first mapping relationship, or a parameter of the third mapping relationship. In some embodiments, the second electronic device may determine the third mapping relationship and/or the parameter of the third mapping relationship based on the first mapping relationship indication information. Therefore, it may also be considered that the first mapping relationship indication information indicates information related to the third mapping relationship. The first mapping relationship indication information may also be referred to as third mapping relationship indication information.

For example, in some embodiments, the first mapping relationship indication information may indicate a first feature value $THH_1$ and a second feature value $THL_1$. Optionally, in some embodiments, the first feature value may be a maximum value of the second intermediate enhancement layer data, and the second feature value may be a minimum value of the second intermediate enhancement layer data. In some other embodiments, the first feature value may be a maximum value of the first intermediate enhancement layer data, and the second feature value may be a minimum value of the first intermediate enhancement layer data. For specific information about the second intermediate enhancement layer data and the first intermediate enhancement layer data, refer to the foregoing embodiment. For brevity, details are not described herein again.

In some embodiments, the first enhancement layer data and the third intermediate enhancement layer data may satisfy the following relationship:

$$\text{EnhanceAfter}[i]=\text{Enhance}[i]\times THH_1+(A-\text{Enhance}\beta[i])\times THL_1 \text{ (Formula 4.1)}$$

Herein, EnhanceAfter[i] represents a value of an $i^{th}$ pixel in the third intermediate enhancement layer data, Enhance[i] represents a value of an $i^{th}$ pixel in the first enhancement layer data, $THH_1$ represents the first feature value, $THL_1$ represents the second feature value, and A is a maximum value of a normalization interval corresponding to the second intermediate enhancement layer data. For example, if the normalization interval is [0, 1], A is 1. If the first electronic device performs normalization processing on the second intermediate enhancement layer data or first intermediate enhancement layer data, the second electronic device may perform inverse normalization processing on the first enhancement layer data according to Formula 4.1, to obtain the third intermediate enhancement layer data. In other words, if the first mapping relationship is normalization, the third mapping relationship is inverse normalization.

It can be understood that the normalization interval from 0 to 1.0 is merely an instance of a normalization interval. The normalization interval may alternatively be another value range, for example, from 0 to 2.0, from -1.0 to 1.0, or from 1.0 to 10.0.

The first feature value $THH_1$ and the second feature value $THL_1$ may alternatively be a maximum value and a minimum value of the third intermediate enhancement layer data respectively.

For another example, in some embodiments, the first mapping relationship indication information may indicate a first feature value $THH_1$ or a second feature value $THL_1$.

When the first mapping relationship indication information indicates the first feature value $THH_1$, the first enhancement layer data and the third intermediate enhancement layer data may satisfy the following relationship:

$$\text{EnchenceAfter}[i]=THH_1+A-\text{Enchence}[i] \text{ (Formula 4.2)}$$

Herein, EnhanceAfter[i] represents a value of an $i^{th}$ pixel in the third intermediate enhancement layer data, Enhance[i] represents a value of an $i^{th}$ pixel in the first enhancement layer data, $THH_1$ represents the first feature value, and A is a maximum value of a normalization interval corresponding to the second intermediate enhancement layer data. For example, if the normalization interval is [0, 1], A is 1.

When the first mapping relationship indication information indicates the second feature value $THL_1$, the first enhancement layer data and the third intermediate enhancement layer data may satisfy the following relationship:

$$\text{EnchenceAfter}[i]=\text{Enchence}[i]+THL_1 \text{ (Formula 4.3)}$$

Herein, EnhanceAfter[i] represents a value of an $i^{th}$ pixel in the third intermediate enhancement layer data, Enhance[i] represents a value of an $i^{th}$ pixel in the first enhancement layer data, and $THL_1$ represents the second feature value.

For another example, in some embodiments, the second electronic device may determine the third mapping relationship and the parameter of the third mapping relationship based on the first mapping relationship indication information. For example, the first mapping relationship indication information may directly indicate the third mapping relationship and the parameter of the third mapping relationship. For another example, the first mapping relationship indication information may include the first mapping relationship and the parameter of the first mapping relationship. In this case, the second electronic device may determine the third mapping relationship and the parameter of the third mapping relationship based on the first mapping relationship and the parameter of the first mapping relationship. In some other embodiments, the mapping relationship may be preset. In this case, the second electronic device may determine the third mapping relationship based on the preset mapping relationship and the parameter of the third mapping relationship or the parameter of the first mapping relationship indicated by the first mapping relationship indication information.

Optionally, in some embodiments, the first enhancement layer data and the third intermediate enhancement layer data may satisfy the following relationship:

$$\mathrm{EnhanceAfter}[i]=\mathrm{TMB}_3(\mathrm{RMidEnhance}_{[i]1}) \quad \text{(Formula 4.4)}$$

Herein, EnhanceAfter[i] represents a value of an $i^{th}$ pixel in the third intermediate enhancement layer data, $\mathrm{RMidEnhance}_{[i]}$ represents a value of an $i^{th}$ pixel in the first enhancement layer data or a reference value, $\mathrm{TMB}_3(\ )$ represents the third mapping relationship, and the reference value is determined based on the value of the $i^{th}$ pixel in the second intermediate enhancement layer data.

Optionally, in some other embodiments, the first enhancement layer data and the third intermediate enhancement layer data may satisfy the following relationship:

$$\mathrm{EnhanceAfter}[i]=\mathrm{TMB}_3(\ )\times\mathrm{RMidEnhance}_{[i]} \quad \text{(Formula 4.5)}$$

Herein, EnhanceAfter[i] represents a value of an $i^{th}$ pixel in the third intermediate enhancement layer data, $\mathrm{TMB}_3(\ )$ represents the third mapping relationship, $\mathrm{RMidEnhance}_{[i]}$ is a value of an $i^{th}$ pixel in the first enhancement layer data or a reference value, and the reference value is a reference value, of the $i^{th}$ pixel, determined based on the value of the $i^{th}$ pixel in the first enhancement layer data.

The reference value of the first enhancement layer data may be determined based on the first feature value $\mathrm{THH}_1$ and the second feature value $\mathrm{THL}_1$. For example, in some embodiments, $\mathrm{RMidEnhance}_{[i]}$, $\mathrm{THH}_1$, and $\mathrm{THL}_1$ may satisfy the following relationship:

$$\mathrm{RMidEnhance}_{[i]}=\mathrm{Enhance}[i]\times\mathrm{THH}_1+(A-\mathrm{Enhance}\beta[i])\times\mathrm{THL}_1 \quad \text{(Formula 4.6)}$$

Herein, $\mathrm{RMidEnhance}_{[i]}$ represents a reference value of an $i^{th}$ pixel of the first enhancement layer data, Enhance[i] represents a value of an $i^{th}$ pixel in the first enhancement layer data, $\mathrm{THH}_1$ represents the first feature value, $\mathrm{THL}_1$ represents the second feature value, and A is a maximum value of a normalization interval corresponding to the second intermediate enhancement layer data. For example, if the normalization interval is [0, 1], A is 1.

In conclusion, in some embodiments, the first enhancement layer data and the third intermediate enhancement layer data may satisfy the following relationship:

$$\mathrm{EnhanceAfter}[i]=\mathrm{TMB}_3(\mathrm{Enhance}[i]\times\mathrm{THH}_1+(A-\mathrm{Enhance}\beta[i])\times\mathrm{THL}_1) \quad \text{(Formula 4.7)}$$

Herein, EnhanceAfter[i] represents a value of an $i^{th}$ pixel in the third intermediate enhancement layer data, Enhance[i] represents a value of an $i^{th}$ pixel in the first enhancement layer data, $\mathrm{THH}_1$ represents the first feature value, $\mathrm{THL}_1$ represents the second feature value, and A is a maximum value of a normalization interval corresponding to the second intermediate enhancement layer data.

Optionally, in some other embodiments, the first enhancement layer data and the third intermediate enhancement layer data may satisfy the following relationship:

$$\mathrm{EnhanceAfter}[i]=\mathrm{TMB}_3(\ )\times\mathrm{Enhance}[i]\times\mathrm{THH}_1+(A-\mathrm{Enhance}\beta[i])\times\mathrm{THL}_1 \quad \text{(Formula 4.8)}$$

Herein, EnhanceAfter[i] represents a value of an $i^{th}$ pixel in the third enhancement layer data, $\mathrm{TMB}_3(\ )$ represents the third mapping relationship, Enhance[i] represents a value of an $i^{th}$ pixel in the first enhancement layer data, $\mathrm{THH}_1$ represents the first feature value, $\mathrm{THL}_1$ represents the second feature value, and A is a maximum value of a normalization interval corresponding to the second intermediate enhancement layer data.

Optionally, in some embodiments, the first enhancement layer data and the third intermediate enhancement layer data may satisfy the following relationship:

$$EnhanceAfter[i]=Enhance[i] \quad (Formula\ 4.9)$$

Herein, EnhanceAfter[i] represents a value of an $i^{th}$ pixel in the third enhancement layer data, and Enhance[i] represents a value of an $i^{th}$ pixel in the first enhancement layer data. In other words, the first enhancement layer data and the third intermediate enhancement layer data may be the same.

In some embodiments, normalization processing may be performed on the first enhancement layer data, and then normalized first enhancement layer data may be processed by using the third mapping relationship, to obtain the third intermediate enhancement layer data. For example, 8-bit (bit) data is used as an example. A value range of the 8-bit data is from 0 to 255. A value of each pixel is divided by 255, a data range of the first enhancement layer data can be converted to a range from 0 to 1.0. Certainly, normalization processing performed on the first enhancement layer data may alternatively be normalization of the first enhancement layer data to another data range. The data range after normalization is not limited in embodiments of this application.

Optionally, in some embodiments, the third intermediate enhancement layer data may be determined by using a neural network. For example, information of a type of the neural network, for example, a transformer or a convolutional neural network, is obtained; the neural network is constructed based on network information in fourth intermediate enhancement data; and the first enhancement layer data is processed by using the neural network, to obtain the third intermediate enhancement layer data.

Optionally, in some other embodiments, the first enhancement layer data may be nonlinear domain data such as log, PQ, HLG, or gamma. In this case, the first enhancement layer data may be first converted to linear domain, and then converted first enhancement layer data is processed based on the third mapping relationship.

Optionally, in some other embodiments, if the first enhancement layer data is nonlinear domain data such as log, PQ, HLG, or gamma, the first enhancement layer data may be first processed based on the third mapping relationship, to obtain the third intermediate enhancement layer data. In other words, in this case, the third intermediate enhancement layer data is nonlinear domain data such as log, PQ, HLG, or gamma. In this case, the third intermediate enhancement layer data may be first converted to the linear domain, and then subsequent processing is performed.

It may be understood that if the first enhancement layer data is the nonlinear domain data such as log, PQ, HLG, or gamma, the first enhancement layer data may be first converted to the linear domain, and then the converted data is processed based on the third mapping relationship, to obtain the third intermediate enhancement layer data.

Optionally, in some other embodiments, the third intermediate enhancement layer data may also be the nonlinear domain data such as log, PQ, HLG, or gamma.

Color space of the first enhancement layer data and color space of the third intermediate enhancement layer data are not limited in embodiments of this application. The color space of the first enhancement layer data and the color space of the third intermediate enhancement layer data may be color spaces such as YUV, RGB, Lab, and HSV.

It should be noted that color gamut mapping may be added before or after the first enhancement layer data is processed, to convert from a current color gamut to a target color gamut. The current color gamut and the target color gamut include but are not limited to BT.2020, BT.709, DCI-P3, sRGB, and the like.

Optionally, in some embodiments, for one HDR image, there may be a plurality of pieces of enhancement layer data of the HDR image. In other words, there may be a plurality of pieces of first enhancement layer data. Correspondingly, there are a plurality of pieces of first enhancement layer data. Each piece of first enhancement layer data in the plurality of pieces of first enhancement layer data may be processed in the foregoing manner. For example, there may be Enhance1[i], Enhance2[i], Enhance3[i], and the like. EnhanceAfter1[i] may be obtained based on Enhance1[i], EnhanceAfter2[i] may be obtained based on Enhance2[i], EnhanceAfter3[i] may be obtained based on Enhance3[i]. The rest may be deduced by analogy. For manners of determining EnhanceAfter1[i], EnhanceAfter2[i], and EnhanceAfter3[i], refer to the foregoing Formula 4.1 to Formula 4.9.

In some embodiments, after the third intermediate enhancement layer data is obtained, upsampling may be performed on the third intermediate enhancement data, and then a second HDR image is determined based on an upsampling result.

In some other embodiments, after the third intermediate enhancement layer data is obtained, upsampling may not be performed, and a second HDR image may be directly determined based on the third intermediate enhancement data.

In some embodiments, an interpolation manner for upsampling is preset. In this case, the second electronic device may perform the upsampling on the third intermediate enhancement layer data based on the preset interpolation manner.

In some other embodiments, the first metadata may further include interpolation indication information, and the interpolation indication information indicates a target interpolation manner. The second electronic device may determine the target interpolation manner based on the interpolation indication information. The first electronic device performs downsampling on the first intermediate enhancement data based on the target interpolation manner, to obtain the second intermediate enhancement data. Correspondingly, the second electronic device may perform the upsampling on the third intermediate enhancement layer data based on the target interpolation manner.

For example, a plurality of interpolation manners may one-to-one correspond to a plurality of indexes. The interpolation indication information may be an index, and an interpolation manner corresponding to the index is the target interpolation manner.

Optionally, in some embodiments, the plurality of interpolation manners may include GL_NEAREST (nearest neighbor) and GL_LINEAR (nearest neighbor) of an OPENGL texture interpolation manner. In some other embodiments, the plurality of interpolation manners also include NEAREST (nearest neighbor) or LINEAR (nearest neighbor) of a Vulkan texture interpolation manner. In some other embodiments, the plurality of interpolation manners may include a plurality of groups of filters. In some other embodiments, the plurality of interpolation manners may include a plurality of directional interpolation manners or a bi-cubic spline. In some other embodiments, the plurality of interpolation manners may also include all the foregoing manners, a subset of the plurality of the foregoing manners or the foregoing one manner, or the like.

In some embodiments, if enhancement layer data and base image data have an integer multiple sampling relationship, for example, two, three, or N base layer image pixels in a width direction or a height direction correspond to one piece of enhancement layer data, and a specific pixel in the two, three, or N base layer image pixels has same coordinates or has coordinates very close to those of the enhancement data in an image. In this case, a base image pixel value base[i] of a base layer image corresponding to a current pixel may be obtained, and then a plurality of specific pixels in pixels surrounding the current pixel are obtained. These pixels have corresponding enhancement data. One, of these specific pixels, whose base layer image value is closest to the base layer image value at a current location is searched for, and enhancement data corresponding to the specific pixel is directly used as enhancement data of the current pixel.

In some embodiments, if enhancement layer data and base image data have an integer multiple sampling relationship, for example, two, three, or N base layer image pixels in a width direction or a height direction correspond to one piece of enhancement layer data, and a specific pixel in the two, three, or N base layer image pixels has same coordinates or has coordinates very close to those of the enhancement data in an image. In this case, enhancement data of a current pixel may be obtained by interpolation or curve fitting based on the enhancement data corresponding to the two, three, or N specific pixels.

Sampling of an enhancement layer image should be determined based on the base layer image. If there is no enhancement data value at a current location, an enhancement data value corresponding to a base layer value closest to a base layer luminance value at the current location is selected from a plurality of (corresponding to enhancement data values) values at a location adjacent to the base layer image as interpolation of the current location.

In some embodiments, an upsampling result of the third intermediate enhancement layer data may be nonlinear domain data such as log, PQ, HLG, or gamma. In this case, the upsampling result may be converted into linear domain.

1303: Determine the second HDR image based on the third intermediate enhancement layer data and the first base layer data.

In some embodiments, third base layer data may be first determined based on the first base layer data, and then the second HDR image is determined based on the third intermediate enhancement layer data and the third base layer data.

In some embodiments, the first base layer data may be processed based on a fourth mapping relationship, to obtain the third base layer data.

In some embodiments, the first metadata may include second mapping relationship indication information, and the second mapping relationship indication information indicates information related to the second mapping relationship. For example, the second mapping relationship indication information may indicate any one or more of the following information: the second mapping relationship, a parameter of the second mapping relationship, a feature value (for example, a maximum value, a minimum value, and/or an intermediate value) of an intermediate base layer data, inverse mapping (which may be referred to as the "fourth mapping relationship") of the second mapping relationship, or a parameter of the fourth mapping relationship. In some embodiments, the second electronic device may determine the fourth mapping relationship and/or the parameter of the fourth mapping relationship based on the second mapping relationship indication information. Therefore, it may also be considered that the second mapping relationship indication information indicates information related to the fourth mapping relationship. The second mapping relationship indication information may also be referred to as fourth mapping relationship indication information.

For example, in some embodiments, the second mapping relationship indication information may indicate a third feature value $THH_2$ and a fourth feature value $THL_2$. In some embodiments, the first feature value may be a maximum value of the intermediate base layer data, and the second feature value may be a minimum value of the intermediate base layer data. In some embodiments, the first feature value may be a maximum value of the first base layer data, and the second feature value may be a minimum value of the first base layer data. For specific information about the intermediate base layer data and the first base layer data, refer to the foregoing embodiment. For brevity, details are not described herein again. The first base layer data and the third base layer data may satisfy the following relationship:

$$baseAfter[i]=base[i]\times THH_3+(A-base[i])\times THL \text{ (Formula 5.1)}$$

Herein, base[i] represents a value of an $i^{th}$ pixel in the first base layer data, baseAfter[i] represents a value of an $i^{th}$ pixel in the third base layer data, $THH_2$ represents the third feature value, $THL_2$ represents the fourth feature value, and A is a maximum value of a normalization interval corresponding to the second intermediate enhancement layer data. For example, if the normalization interval is [0, 1], A is 1. If the first electronic device performs normalization processing on the intermediate base layer data and the first intermediate enhancement layer data, the second electronic device may perform inverse normalization processing on the first base layer data according to Formula 5.1, to obtain the third base layer data. In other words, if the second mapping relationship is normalization, the fourth mapping relationship is inverse normalization.

It can be understood that the normalization interval from 0 to 1.0 is merely an instance of a normalization interval. The normalization interval may alternatively be another value range, for example, from 0 to 2.0, from -1.0 to 1.0, or from 1.0 to 10.0.

In some embodiments, the third base layer data may be the same as the intermediate base layer data.

The third feature value $THH_2$ and the fourth feature value $THL_2$ may alternatively be a maximum value and a minimum value of the third base layer data respectively.

In some embodiments, the second mapping relationship indication information may indicate the fourth feature value $THL_2$. In this case, the first base layer data and the third base layer data may satisfy the following relationship:

$$baseAfter[i]=base[i]+THL_2 \text{ (Formula 5.2)}$$

Herein, base[i] represents a value of an $i^{th}$ pixel in the first base layer data, baseAfter[i] represents a value of an $i^{th}$ pixel in the third base layer data, and $THL_2$ represents the fourth feature value.

In some embodiments, the second mapping relationship indication information may indicate the third feature value $THH_2$. In this case, the first base layer data and the third base layer data may satisfy the following relationship:

$$baseAfter[i]=THH_2+A-base[i] \text{ (Formula 5.3)}$$

Herein, base[i] represents a value of an $i^{th}$ pixel in the first base layer data, baseAfter[i] represents a value of an $i^{th}$ pixel in the third base layer data, $THH_2$ represents the third feature value, A is a maximum value stored in the first base layer data, and when the first base layer data is normalized to a range from 0 to 1.0, A is a maximum value in the normalization range, namely, 1.0. Similarly, the normalization range [0, 1.0] is merely an example, and an upper limit of the normalization range may be another value and/or a lower limit of the normalization range may be another value.

Optionally, in some embodiments, the first base layer data and the third base layer data may satisfy the following relationship:

$$baseAfter[i]=TMB_4(R_{base[i]\_1}) \text{ (Formula 5.4)}$$

Herein, baseAfter[i] represents a value of an $i^{th}$ pixel in the third base layer data, $R_{base[i]\_1}$ represents a value of an $i^{th}$ pixel in the first base layer data or a first reference value, $TMB_4(\ )$ represents the fourth mapping relationship, and the first reference value is determined based on the value of the $i^{th}$ pixel in the first base layer data.

If $R_{base[i]\_1}$ is the value of the $i^{th}$ pixel in the first base layer data, Formula 5.4 may also be represented by:

$$baseAfter[i]=TMB_4(base[i]) \text{ (Formula 5.5)}$$

Herein, baseAfter[i] represents a value of an $i^{th}$ pixel in the third base layer data, base[i] represents a value of an $i^{th}$ pixel in the first base layer data, and $TMB_4(\ )$ represents the fourth mapping relationship.

Optionally, in some embodiments, the first reference value of the $i^{th}$ pixel in the first base layer data may be determined based on the third feature value $THH_2$ and the fourth feature value $THL_2$. For example, in some embodiments, $R_{base[i]\_1}$, $THH_2$, and $THL_2$ may satisfy the following relationship:

$$Rbase_{[i]\_1}=base[i]\times THH_2+(A-base[i])\times THL_2 \quad (Formula\ 5.6)$$

Herein, $R_{base[i]\_1}$ represents the first reference value of the $i^{th}$ pixel in the first base layer data, $THH_2$ represents the third feature value, $THL_2$ represents the fourth feature value, and when the first base layer data is normalized to a range from 0 to 1.0, A is a maximum value in the normalization range, namely, 1.0.

In conclusion, in some embodiments, the first base layer data and the third base layer data may satisfy the following relationship:

$$baseAfter[i]=TMB_4(base[i]\times THH_2+(A-base[i])\times THL_2)(Formula\ 5.7)$$

Herein, base[i] represents a value of an $i^{th}$ pixel in the first base layer data, baseAfter[i] represents a value of an $i^{th}$ pixel in the third base layer data, $TMB_4(\ )$ represents the fourth mapping relationship, $THH_2$ represents the third feature value, $THL_2$ represents the fourth feature value, and A is a maximum value of a normalization interval corresponding to the second intermediate enhancement layer data. For example, if the normalization interval is [0, 1], A is 1.

Optionally, in some other embodiments, the first reference value of the $i^{th}$ pixel in the first base layer data may be determined based on the fourth feature value $THL_2$. For example, in some embodiments, $R_{base[i]\_1}$ and $THL_2$ may satisfy the following relationship:

$$Rbase_{[i]\_1}=base[i]+THL_2 \quad (Formula\ 5.8)$$

Herein, $R_{base[i]\_1}$ represents the first reference value of the $i^{th}$ pixel in the first base layer data, and $THL_2$ represents the fourth feature value.

In conclusion, in some embodiments, the first base layer data and the third base layer data may satisfy the following relationship:

$$baseAfter[i]=TMB_4(base[i]+THL_2) \quad (Formula\ 5.9)$$

Herein, base[i] represents a value of an $i^{th}$ pixel in the first base layer data, baseAfter[i] represents a value of an $i^{th}$ pixel in the third base layer data, $TMB_4(\ )$ represents the fourth mapping relationship, and $THL_2$ represents the fourth feature value.

Optionally, in some embodiments, the first base layer data and the third base layer data satisfy the following relationship:

$$baseAfter[i]=TMB_4(R_{base[i]\_2})\times R_{base[i]\_3} \quad (Formula\ 5.10)$$

Herein, baseAfter[i] represents a value of an $i^{th}$ pixel in the third base layer data, $TMB_4(\ )$ represents the fourth mapping relationship, $R_{base[i]\_2}$ is a value of an $i^{th}$ pixel in the first base layer data or a second reference value, the second reference value is a second reference value, of the $i^{th}$ pixel, determined based on the value of the $i^{th}$ pixel in the first base layer data, $R_{base[i]\_3}$ is the value of the $i^{th}$ pixel in the first base layer data or a third reference value, and the third reference value is determined based on the value of the $i^{th}$ pixel in the first base layer data.

For example, in some embodiments, $R_{base[i]\_2}$ is the second reference value of the $i^{th}$ pixel in the first base layer data, and $R_{base[i]\_3}$ is the value of the $i^{th}$ pixel in the first base layer data. If $L_i$ represents the second reference value of the $i^{th}$ pixel in the first base layer data, and base[i] represents the value of the $i^{th}$ pixel in the first base layer data, the first base layer data and the third base layer data satisfy the following relationship:

$$baseAfter[i]=TMB_4(L_i)\times base[i] \quad (Formula\ 5.11)$$

The second reference value of the $i^{th}$ pixel in the first base layer data may be a luminance value or another value determined based on the pixel value of the $i^{th}$ pixel.

For example, in some other embodiments, $R_{base[i]\_2}$ is the second reference value of the $i^{th}$ pixel in the first base layer data, and $R_{base[i]\_3}$ is the third reference value determined based on the value of the $i^{th}$ pixel in the first base layer data. For example, the third reference value may also be determined according to Formula 5.6 or Formula 5.8. For example, if the third reference value is determined according to Formula 5.6, the first base layer data and the third base layer data may satisfy the following relationship:

$$baseAfter[i]=TMB_4(L_i)\times(base[i]\times THH_2+(A-base[i])\times THL_2) \text{ (Formula 5.12)}$$

For another example, if the third reference value is determined according to Formula 5.8, the first base layer data and the third base layer data may satisfy the following relationship:

$$baseAfter[i]=TMB_4(L_i)\times base[i]+THL_2 \text{ (Formula 5.13)}$$

In some embodiments, the third base layer data may be further determined based on a fifth mapping relationship and the fourth mapping relationship.

For example, in some embodiments, the first base layer data and the third base layer data may satisfy the following relationship:

$$baseAfter[i]=TMB_4(TMB_5(R_{base[i]\_1})) \text{ (Formula 5.14)}$$

Herein, baseAfter[i] represents a value of an $i^{th}$ pixel in the third base layer data, $R_{base[i]\_1}$ represents a value of an $i^{th}$ pixel in the first base layer data or a first reference value, $TMB_4()$ represents the fourth mapping relationship, and $TMB_3()$ represents the fifth mapping relationship. For a manner of determining the first reference value, refer to the foregoing embodiment. For brevity, details are not described herein again.

For another example, in some embodiments, the first base layer data and the second base layer data may satisfy the following relationship:

$$baseAfter[i]=TMB_4(R_{base[i]\_2})\times TMB_5(R_{base[i]\_3}) \text{ (Formula 5.15)}$$

Herein, baseAfter[i] represents a value of an $i^{th}$ pixel in the third base layer data, $TMB_4()$ represents the fourth mapping relationship, $TMB_3()$ represents the fifth mapping relationship, $R_{base[i]\_2}$ is a value of an $i^{th}$ pixel in the first base layer data or a second reference value, the second reference value is a second reference value, of the $i^{th}$ pixel, determined based on the value of the $i^{th}$ pixel in the first base layer data, $R_{base[i]\_3}$ is the value of the $i^{th}$ pixel in the first base layer data or a third reference value, and the third reference value is determined based on the value of the $i^{th}$ pixel in the first base layer data. For manners of determining the second reference value and the third reference value, refer to the foregoing embodiment. For brevity, details are not described herein again.

In some embodiments, the fourth mapping relationship may be a global and/or local tone mapping function.

In some embodiments, the fifth mapping relationship may be linear, or in a form of spline, piecewise curve, or the like.

For another example, in some embodiments, the first base layer data may be further processed based on a filter, the fourth mapping relationship, and the fifth mapping relationship, to obtain the third base layer data.

For example, baseMid1[i] and baseAfter2[i] may be first obtained by using the filter, where baseMid1[i] satisfies Formula 5.16 or Formula 5.17, and baseAfter2[i] satisfies Formula 5.18:

$$baseMid1[i]=F[base[i]] \text{ (Formula 5.16)}$$

$$baseMid1[i]=\sum F[n]\times base[i+n] \text{ (Formula 5.17)}$$

$$baseAfter2[i]=base[i]-baseMid1[i] \text{ (Formula 5.18)}$$

Herein, base[i] represents a value of an $i^{th}$ pixel in the first base layer data, and F[] represents the filter.

In some embodiments, baseMid1[i], baseAfter2[i], and the third base layer data may satisfy the following relationship:

$$\text{baseAfter}[i]=\text{TMB}_4(Li)\times\text{TMB}_5(\text{baseMid1}[i]) \quad (\text{Formula 5.19})$$

In some other embodiments, baseMidl[i], baseAfter2[i], and the third base layer data may satisfy the following relationship:

$$\text{baseAfter}[i]=\text{TMB}_4(\text{TMB}_5(\text{baseMid1}[i])) \quad (\text{Formula 5.20})$$

Herein, baseAfter[i] represents a value of an $i^{th}$ pixel in the third base layer data, $\text{TMB}_4(\ )$ represents the fourth mapping relationship, and $\text{TMB}_3(\ )$ represents the fifth mapping relationship.

In some embodiments, the fourth mapping relationship may be a filter. If F[] represents the filter, the third base layer data may be obtained by using the filter. The third base layer data and the first base layer data may satisfy the following relationship:

$$\text{baseAfter}[i]=F[\text{base}[i]] \quad (\text{Formula 5.21})$$

or

$$\text{baseAfter}[i]=\sum F[n]\times\text{base}[i+n] \quad (\text{Formula 5.22})$$

Herein, base[i] represents a value of an $i^{th}$ pixel in the first base layer data, and F[] represents the filter.

baseAfter2[i] may be further obtained by using the filter, where baseAfter2[i]-base[i]-baseMid1[i].

In some other embodiments, the third base layer data and the first base layer data may satisfy the following relationship:

$$\text{baseAfter}[i]=F(\text{base}[i])=[\text{baseAfter1}[i], \text{baseAfter2}[i], \text{baseAfter3}[i]\ldots] \quad (\text{Formula 5.23})$$

Herein, base[i] represents a value of an $i^{th}$ pixel in the first base layer data, and F( ) represents the filter.

In some embodiments, the fourth mapping relationship may be a sigmoid curve, a cubic spline curve, a gamma curve, a linear curve, or a piecewise curve, or the like.

For example, in some embodiments, the fourth mapping relationship may be the following curve:

$$L' = F(L) = a \times \left( \frac{p \times L^n}{(p-1) \times L^n + 1} \right)^m + b$$

Alternatively, the fourth mapping relationship may be an inverse curve of the curve. L and L' may be normalized optical signals or electrical signals. This is not limited in embodiments of this application. For an $i^{th}$ element of a base layer, the foregoing Formula may be transformed into:

$$L_i' = F(L_i) = a \times \left( \frac{p \times L_i^n}{(p-1) \times L_i^n + 1} \right)^m + b$$

In other words, $\text{TMB}_4(L_i)$-$F(L_i)$.

Similarly, the fifth mapping relationship may be a filter, a sigmoid curve, a cubic spline curve, a gamma curve, a linear curve, or a piecewise curve, or the like.

The filter in this embodiment of this application may be a bilateral filter, an interpolation filter, or the like. This is not limited in embodiments of this application.

In some embodiments, the fourth mapping relationship may be a preset mapping relationship and/or the fifth mapping relationship may be a preset mapping relationship.

In some other embodiments, the second mapping relationship indication information may further indicate a parameter of the mapping relationship. The second electronic device may determine the fourth mapping relationship and/or the fifth mapping relationship based on the parameter, of the mapping relationship, indicated by the second mapping relationship indication information.

Optionally, in some embodiments, the first base layer data may be nonlinear domain data such as log, PQ, HLG, or gamma. In this case, the first base layer data may be first converted to linear domain, and then converted data is processed based on the fourth mapping relationship, to obtain the third base layer data.

Optionally, in some other embodiments, if the first base layer data is nonlinear domain data such as log, PQ, HLG, or gamma, the first enhancement layer data may be first processed based on the fourth mapping relationship, to obtain the third base layer data. In other words, in this case, the third base layer data is nonlinear domain data such as log, PQ, HLG, or gamma. In this case, the third base layer data may be converted to linear domain.

Optionally, in some embodiments, other processing may be performed on the first base layer data before the first base layer data is processed. For example, color gamut mapping is performed on the first base layer data, and a color gamut of the first base layer data is mapped to a target color gamut. Then, mapped first base layer data is processed based on the fourth mapping relationship.

Optionally, in some other embodiments, after the third base layer data is obtained, the third base layer data may be further processed. For example, color gamut mapping may be performed on the third base layer data, and a color gamut of the third base layer data is mapped to a target color gamut.

This embodiment of this application does not limit the color gamut of the first base layer data and the color gamut of the third base layer data and the target color gamut, for example, the color gamut may be BT.2020, BT.9011, DCI-P3, sRGB, or the like.

This application does not limit the first base layer data and the third base layer data to any domain, and the first base layer data and the third base layer data may be in linear domain, PQ domain, log domain, or the like. This application does not limit color space of the first base layer data and color space of the third base layer data either, where the color space may be YUV, RGB, Lab, HSV, or the like.

Optionally, in some other embodiments, the third base layer data may be the same as the first base layer data. In this case, the second HDR image may be determined based on the third intermediate enhancement layer data and the first base layer data.

As described above, in some embodiments, the third intermediate enhancement layer data may be the same as the first enhancement layer data. In this case, the second HDR image may be determined based on the first intermediate enhancement layer data and the third base layer data.

It may be understood that, when the third intermediate enhancement layer data is the same as the first enhancement layer data and the first base layer data is the same as the third base layer data, the second HDR image may be determined based on the first enhancement layer data and the first base layer data.

The third base layer data and the third intermediate enhancement layer data are used as an example to describe how to determine the second HDR image.

Optionally, in some embodiments, the third intermediate enhancement layer data may be first processed based on a target conversion function, to obtain a converted result. The second HDR image is determined based on the third base layer data and the converted result.

If EnhanceAfter[i] represents a value of an $i^{th}$ pixel in the third intermediate enhancement layer data, and f( ) represents the target conversion function, the converted result may be represented by f(EnhanceAfter[i]). If recHDR[i] represents a value of an $i^{th}$ pixel in the second HDR image, and baseAfter[i] represents a value of an $i^{th}$ pixel in the third base layer data, in some embodiments, baseAfter[i], recHDR[i], and f(EnhanceAfter[i]) may satisfy the following relationship:

$$recHDR[i] = baseAfter[i] \times f(EnhanceAfter[i]) \quad (Formula\ 6.1)$$

In some other embodiments, baseAfter[i], recHDR[i], and f(EnhanceAfter[i]) may satisfy the following relationship:

$$recHDR[i] = baseAfter[i] + f(EnhanceAfter[i]) \quad (Formula\ 6.2)$$

The target conversion function f( ) is not limited in embodiments of this application. For example, in some embodiments, the target conversion function may be log, OETF, EOTF, a piecewise curve, or the like. For another example, in some embodiments, f(EnhanceAfter[i])=EnhanceAfter[i]. For another example, in some other embodiments, f(EnhanceAfter[i])=C×EnhanceAfter[i], where the parameter C may be a preset value or may be a value determined based on EnhanceAfter[i]. For another example, in some other embodiments, f(EnhanceAfter[i])=EnhanceAfter[i]+D, where the parameter D may be a preset value or may be a value determined based on EnhanceAfter[i].

In some embodiments, the second HDR image may satisfy the following relationship:

$$recHDR[i]=A\times g(baseAfter1[i]\times f1(enchenceAfter1[i]))+B\times g(baseAfter2[i])... \text{ (Formula 6.3)}$$

Herein, the conversion function f1() may be a numeric field conversion function indicated by the first metadata, or may be a conversion function agreed upon. For example, fl(x)=x or is in another form. This is not limited in embodiments of this application. A, B, and the like are preset constants or values indicated by the first metadata. g() is a value change or inverse normalization function preset or indicated in the first metadata.

In some embodiments, the second HDR image may satisfy the following relationship:

$$recHDR[i]=A\times baseAfter1[i]+A1\times f1(enchenceAfter1[i])+baseAfter1[i]+B\times baseAfter2[i] \text{ (Formula 6.4)}$$

Herein, f1() may be a conversion function indicated by the first metadata, or may be a conversion function agreed upon. For example, f1(x)=x or is in another form. This is not limited in embodiments of this application. A and B are constants, or are values indicated by the first metadata.

In some embodiments, the second HDR image may satisfy the following relationship:

recHDR[i]=A×baseAfter1[i]×f1(enchenceAfter1[i])+B×baseAfter2[i]×f2(enchenceAfter2[i]) +C×B×ba (Formula 6.5) $\hspace{2cm}$ (Formula 6.5)

Herein, f1(), f2(), and f3() may be conversion functions indicated by the first metadata, or may be conversion functions agreed upon. For example, fl(x)=x or is in another form. This is not limited in embodiments of this application. A, B, C, and the like are constants, or are values indicated by the first metadata.

In some embodiments, the second HDR image may satisfy the following relationship:

recHDR[i]=A×baseAfter1[i]+A1×f1(EnchenceAfter1[i])+baseAfter1[i]+B×baseAfter2[i]+B1×f1(ench (Formula 6.6) $\hspace{2cm}$ (Formula 6.6)

Herein, f1(), f2(), and f3() may be conversion functions indicated by the first metadata, or may be conversion functions agreed upon. For example, fl(x)=x or is in another form. This is not limited in embodiments of this application. A, B, C, and the like are constants, or are values indicated by the first metadata.

For manners of determining meanings of baseAfter1[i], baseAfter2[i], EnchenceAfter1[i], EnchenceAfter2[i], and the like, refer to the foregoing embodiment. For brevity, details are not described herein again.

It should be noted that a form of f(x) is not limited in this application, that is, baseAfter[i] and enchenceAfter[i] are not limited in any domain, and may be linear domain, PQ domain, log domain, or the like. This application also does not limit color space of baseafter[i] and color space of enchenceAfter[i], where the color space may be YUV, RGB, Lab, HSV, or the like.

In some embodiments, recHDR[i] may be any component of an RGB component or a YUV component, and f(enchenceAfter[i]) is a gain of any component obtained by using the third intermediate enhancement layer data.

As described above, in some embodiments, the upsampling may be performed on the third intermediate enhancement layer data. In this case, the upsampling result of the third intermediate enhancement layer data may be processed based on the target conversion function, to obtain the converted result. The second HDR image is determined based on the third base layer data and the converted result. In other words, in this case, EnhanceAfter[i] in Formula 6.1 to Formula 6.6 represents a value of an $i^{th}$ pixel in the upsampling result of the third intermediate enhancement layer data.

For a specific process of determining the second HDR image based on the third intermediate enhancement layer data and the first base layer data, a specific process of determining the second HDR image based on the first enhancement layer data and the third base layer data, and a specific process of determining the second HDR image based on the first enhancement layer data and the first base layer data, refer to the foregoing descriptions of determining the second HDR image based on the third base layer data and the third intermediate enhancement data. For brevity, details are not described herein again.

Optionally, in some embodiments, the second HDR image may be further processed to obtain a third HDR image.

For example, in some embodiments, the first metadata may further include reconstruction indication information. The second HDR image may be processed based on the reconstruction indication information, to obtain the third HDR image.

For example, in some embodiments, the reconstruction indication information indicates a fifth feature value $THH_3$ and a sixth feature value $THL_3$. The third feature value $THH_3$ may be an upper limit of the third HDR image, and the sixth feature value $THL_3$ may be a lower limit of the third HDR image. If recHDRafter[i] represents a value of an $i^{th}$ pixel of the third HDR image, and recHDR[i] represents a value of an $i^{th}$ pixel of the second HDR image, recHDRafter[i], recHDR[i], $THH_3$, and $THL_3$ may satisfy the following relationship:

$$ecHDRAfter[i]=recHDR[i]\times THH_3+(A-recHDR[i])\times THL_3 \text{ (Formula 7.1)}$$

Herein, A is a maximum value stored by recHDR. For example, when recHDR is normalized to a range from 0 to 1.0, A is 1.0.

For another example, in some other embodiments, the reconstruction indication information may indicate the fifth feature value $THH_3$. In this case, recHDRafter[i], recHDR[i], and $THH_3$ may satisfy the following relationship:

$$recHDRAfter[i]=THH_3+A-recHDR[i] \text{ (Formula 7.2)}$$

Herein, A is a maximum value stored by recHDR, and when recHDR is normalized to a range from 0 to 1.0, A is 1.0.

For another example, in some other embodiments, the reconstruction indication information may indicate the sixth feature value $THL_3$. In this case, recHDRafter[i], recHDR[i], and $THL_3$ may satisfy the following relationship:

$$recHDRAfter[i]=recHDR[i]+THL_3 \text{ (Formula 7.3)}$$

Optionally, in some embodiments, the second HDR image may be further processed by using an exponent of 2, log, or in another manner, to obtain the third HDR image.

FIG. 14 is a block diagram of a structure of an electronic device according to an embodiment of this application. As shown in FIG. 14, the electronic device 1400 includes an obtaining unit 1401, a processing unit 1402, and an encoding unit 1403.

The obtaining unit 1401 is configured to obtain a first HDR image and first base layer data corresponding to the first HDR image.

The processing unit 1402 is configured to determine first intermediate enhancement layer data based on the first HDR image and the first base layer data.

The processing unit 1402 is further configured to process the first intermediate enhancement layer data based on a first mapping relationship, to obtain first enhancement layer data.

The encoding unit 1403 is configured to encode the first base layer data, the first enhancement layer data, and first metadata, to obtain a bitstream.

For specific functions and beneficial effect of the obtaining unit 1401, the processing unit 1402, and the encoding unit 1403, refer to the foregoing embodiments. For brevity, details are not described herein again.

In some embodiments, the obtaining unit 1401, the processing unit 1402, and the encoding unit 1403 may be implemented by a processor.

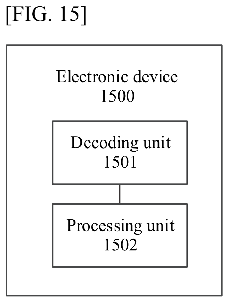

FIG. 15 is a block diagram of a structure of another electronic device according to an embodiment of this application. The electronic device 1500 shown in FIG. 15 includes a decoding unit 1501 and a processing unit 1502.

The decoding unit 1501 is configured to decode an obtained bitstream, to obtain first base layer data, first enhancement layer data, and first metadata.

The processing unit 1502 is configured to process the first enhancement layer data based on a third mapping relationship, to obtain third intermediate enhancement layer data.

The processing unit 1502 is further configured to determine a second HDR image based on the third intermediate enhancement layer data and the first base layer data.

For specific functions and benefit effect of the decoding unit 1501 and the processing unit 1502, refer to the

foreging embodiments. For brevity, details are not described herein.

In some embodiments, the decoding unit 1501 and the processing unit 1502 may be implemented by a processor.

An embodiment of this application further provides an electronic device. The electronic device may be configured to implement the foregoing encoding method embodiment. The electronic device includes a processor and a storage. The processor is configured to execute computer program or instructions stored in the storage, or read data/signaling stored in the storage, to perform the methods in the foregoing method embodiments. The storage may be integrated with the processor, or may be disposed separately. The storage may be further configured to store a bitstream determined by the processor. Optionally, there are one or more processors. Optionally, there are one or more storages. Optionally, the electronic device may further include a transceiver. The transceiver is configured to receive and/or send a signal. For example, the transceiver may be configured to send the bitstream determined by the processor to another electronic device.

An embodiment of this application further provides an electronic device. The electronic device may be configured to implement the foregoing decoding method embodiment. The electronic device includes a processor and a storage. The processor is configured to execute computer program or instructions stored in the storage, or read data/signaling stored in the storage, to perform the methods in the foregoing method embodiments. The storage may be integrated with the processor, or may be disposed separately. Optionally, there are one or more processors. Optionally, there are one or more storages. Optionally, the electronic device may further include a transceiver. The transceiver is configured to receive and/or send a signal. For example, the transceiver may be configured to receive a bitstream.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the storage mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the storage (storage module) may be integrated into the processor.

It should further be noted that the storage described herein is intended to include, but is not limited to, these and any other appropriate type of storage.

An embodiment of this application further provides a diagram of a chip system. The chip system (or may be referred to as a processing system) includes a logic circuit and an input/output interface (input/output interface).

The logic circuit may be a processing circuit in the chip system. The logic circuit may be coupled and connected to a storage unit, and invoke instructions in the storage unit, so that the chip system can implement the methods and functions in embodiments of this application. The input/output interface may be an input/output circuit in the chip system, and outputs information processed by the chip system, or inputs to-be-processed data or signaling information to the chip system for processing.

In a solution, the chip system is configured to implement embodiments of the foregoing encoding methods. For example, the chip system is configured to implement a processing-related operation performed by the source device, the capture device, or the front-end device in the foregoing method embodiments.

In a solution, the chip system is configured to implement embodiments of the foregoing decoding methods. For example, the chip system is configured to implement a processing-related operation performed by the target device, the terminal device, or the terminal display device in the foregoing method embodiments.

An embodiment of this application further provides a computer-readable storage medium. The computer-readable storage medium stores computer instructions for implementing the method performed by the encoding side device (for example, the source device, the capture device, or the front-end device) in the foregoing method embodiments.

An embodiment of this application further provides a computer-readable storage medium. The computer-readable storage medium stores computer instructions for implementing the method performed by the decoding side device (for example, the target device, the terminal device, or the terminal display device) in the foregoing method embodiments.

An embodiment of this application further provides a computer program product, including instructions. When the instructions are executed by a computer, the method performed by the encoding side device in the foregoing method embodiments is implemented.

An embodiment of this application further provides a computer program product, including instructions. When the instructions are executed by a computer, the method performed by the decoding side device in the foregoing method embodiments is implemented.

An embodiment of this application further provides a communication system, including the foregoing encoding side device and decoding side device.

An embodiment of this application further provides a bitstream. The bitstream is determined by using the foregoing encoding method.

An embodiment of this application further provides a storage. The storage is configured to store a bitstream determined by using the foregoing encoding method.

This application further provides a computer device. The computer device includes a storage, and the storage is configured to store a bitstream determined by using the foregoing encoding method.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An encoding method, wherein the method comprises:

   obtaining a first HDR image and first base layer data corresponding to the first HDR image;
   determining first intermediate enhancement layer data based on the first HDR image and the first base layer data;
   processing the first intermediate enhancement layer data based on a first mapping relationship, to obtain first enhancement layer data; and
   encoding the first base layer data, the first enhancement layer data, and first metadata, to obtain a bitstream.

**2.** The method according to claim 1, wherein determining the first intermediate enhancement layer data based on the first HDR image and the first base layer data comprises:

determining second base layer data based on the first base layer data; and
determining the first intermediate enhancement layer data based on the first HDR image and the second base layer data.

**3.** The method according to claim 2, wherein determining the second base layer data based on the first base layer data comprises:
processing the first base layer data based on a second mapping relationship, to obtain the second base layer data.

**4.** The method according to claim 3, wherein before processing the first base layer data based on the second mapping relationship, to determine the second base layer data, the method further comprises:

determining at least one feature luminance value based on the first HDR image;
determining at least one pixel from the first base layer data, wherein the at least one pixel one-to-one corresponds to the at least one feature luminance value, and a location of each pixel in the at least one pixel is the same as a location of a corresponding feature luminance value; and
determining the second mapping relationship based on the at least one feature luminance value and a value of the at least one pixel.

**5.** The method according to claim 3 or 4, wherein processing the first base layer data based on the second mapping relationship, to determine the second base layer data comprises:

the first base layer data and the second base layer data satisfy the following relationship:

$$baseAfter[i]=TMB_2(R_{base[i]\_2})\times R_{base[i]\_3},$$

wherein
baseAfter[i] represents a value of an $i^{th}$ pixel in the second base layer data, $R_{base[i]\_1}$ represents a value of an $i^{th}$ pixel in the first base layer data or a first reference value, $TMB_2()$ represents the second mapping relationship, and the first reference value is determined based on the value of the $i^{th}$ pixel in the first base layer data; or
the first base layer data and the second base layer data satisfy the following relationship:

$$baseAfter[i]=TMB_2(R_{base[i]\_1}),$$

wherein
baseAfter[i] represents a value of an $i^{th}$ pixel in the second base layer data, $TMB_2()$ represents the second mapping relationship, $R_{base[i]\_2}$ is a value of an $i^{th}$ pixel in the first base layer data or a second reference value, the second reference value is a second reference value, of the $i^{th}$ pixel, determined based on the value of the $i^{th}$ pixel in the first base layer data, $R_{base[i]\_3}$ is the value of the $i^{th}$ pixel in the first base layer data or a third reference value, and the third reference value is determined based on the value of the $i^{th}$ pixel in the first base layer data.

**6.** The method according to any one of claims 2 to 5, wherein determining the first intermediate enhancement layer data based on the first HDR image and the second base layer data comprises:

processing the second base layer data based on a target conversion function, to obtain a converted result; and
determining the first intermediate enhancement layer data based on the first HDR image and the converted result.

**7.** The method according to any one of claims 1 to 6, wherein processing the first intermediate enhancement data based on the first mapping relationship, to obtain the first enhancement layer data comprises:

performing downsampling on the first intermediate enhancement layer data, to obtain second intermediate enhancement layer data; and
processing the second intermediate enhancement data based on the first mapping relationship, to obtain the first enhancement layer data.

8. The method according to claim 7, wherein performing the downsampling on the first intermediate enhancement layer data, to obtain the second intermediate enhancement layer data comprises:

   determining a target interpolation manner; and
   performing the downsampling on the first intermediate enhancement data based on the target interpolation manner.

9. The method according to claim 8, wherein determining the target interpolation manner comprises:
   determining the target interpolation manner from a plurality of interpolation manners, wherein a difference between the first intermediate enhancement data and restored data obtained after upsampling is performed on the second intermediate enhancement data based on the target interpolation manner is less than a difference between the first intermediate enhancement data and restored data obtained after upsampling is performed on reference intermediate enhancement data based on a reference interpolation manner, the reference intermediate enhancement data is intermediate enhancement data obtained after the downsampling is performed on the first intermediate enhancement data based on the reference interpolation manner, and the reference interpolation manner is any interpolation manner other than the target interpolation manner in the plurality of interpolation manners.

10. The method according to claim 8 or 9, wherein the first metadata comprises interpolation manner indication information, and the interpolation manner indication information indicates the target interpolation manner.

11. The method according to any one of claims 1 to 10, wherein the first mapping relationship comprises one or more of the following: a numerical mapping relationship, a sigmoid curve, a cubic spline curve, a gamma curve, a linear curve, or a piecewise curve.

12. A decoding method, wherein the method comprises:

    decoding an obtained bitstream, to obtain first base layer data, first enhancement layer data, and first metadata;
    processing the first enhancement layer data based on a third mapping relationship, to obtain third intermediate enhancement layer data; and
    determining a second HDR image based on the third intermediate enhancement layer data and the first base layer data.

13. The method according to claim 12, wherein determining the second HDR image based on the third intermediate enhancement layer data and the first base layer data comprises:

    determining third base layer data based on the first base layer data; and
    determining the second HDR image based on the third intermediate enhancement layer data and the third base layer data.

14. The method according to claim 13, wherein determining the third base layer data based on the first base layer data comprises:
    processing the first base layer data based on a fourth mapping relationship, to obtain the third base layer data.

15. The method according to claim 14, wherein processing the first base layer data based on the fourth mapping relationship, to determine the third base layer data comprises:

    the first base layer data and the third base layer data satisfy the following relationship:

$$\text{baseAfter}[i]=\text{TMB}_4(R_{\text{base}[i]\_1}),$$

    wherein
    baseAfter[i] represents a value of an $i^{\text{th}}$ pixel in the third base layer data, $R_{\text{base}[i]\_1}$ represents a value of an $i^{\text{th}}$ pixel in the first base layer data or a first reference value, $\text{TMB}_4()$ represents the fourth mapping relationship, and the first reference value is determined based on the value of the $i^{\text{th}}$ pixel in the first base layer data; or
    the first base layer data and the third base layer data satisfy the following relationship:

$$\text{baseAfter}[i] = \text{TMB}_4(R_{\text{base}[i]\_2}) \times R_{\text{base}[i]\_3},$$

wherein

baseAfter[i] represents a value of an $i^{\text{th}}$ pixel in the third base layer data, $\text{TMB}_4( )$ represents the fourth mapping relationship, $R_{\text{base}[i]\_2}$ is a value of an $i^{\text{th}}$ pixel in the first base layer data or a second reference value, the second reference value is determined based on the value of the $i^{\text{th}}$ pixel in the first base layer data, $R_{\text{base}[i]\_3}$ is the value of the $i^{\text{th}}$ pixel in the first base layer data or a third reference value, and the third reference value is determined based on the value of the $i^{\text{th}}$ pixel in the first base layer data.

16. The method according to any one of claims 13 to 15, wherein determining the second HDR image based on the third intermediate enhancement layer data and the third base layer data comprises:

   processing the third intermediate enhancement layer data based on a target conversion function, to obtain a converted result; and
   determining the second HDR image based on the third base layer data and the converted result.

17. The method according to any one of claims 12 to 16, wherein after processing the first enhancement layer data based on the third mapping relationship, to determine the third intermediate enhancement layer data, the method further comprises:
   performing upsampling on the third intermediate enhancement layer data.

18. The method according to claim 17, wherein the first metadata comprises interpolation manner indication information, the interpolation manner indication information indicates a target interpolation manner, and the target interpolation manner is used to perform the upsampling on the third intermediate enhancement layer data.

19. The method according to any one of claims 12 to 17, wherein the third mapping relationship comprises one or more of the following: a numerical mapping relationship, a sigmoid curve, a cubic spline curve, a gamma curve, a linear curve, or a piecewise curve.

20. An electronic device, wherein the electronic device is configured to implement the method according to any one of claims 1 to 11, or is configured to implement the method according to any one of claims 12 to 19.

21. A computer device, comprising a processor, wherein the processor is configured to: be coupled to a storage, and read and execute instructions and/or program code in the storage, to perform the method according to any one of claims 1 to 11, or perform the method according to any one of claims 12 to 19.

22. A chip system, comprising a logic circuit, wherein the logic circuit is configured to: be coupled to an input/output interface, and perform data transmission through the input/output interface, to perform the method according to any one of claims 1 to 11, or perform the method according to any one of claims 12 to 19.

23. A computer-readable medium, wherein the computer-readable medium stores program code, and when the computer program code is run on a computer, the computer is enabled to perform the method according to any one of claims 1 to 11, or the computer is enabled to perform the method according to any one of claims 12 to 19.

24. A bitstream, wherein the bitstream is determined according to the method according to any one of claims 1 to 11.

25. A computer program product, wherein the computer program product comprises computer program code, and when the computer program code is run on a computer, the computer is enabled to perform the method according to any one of claims 1 to 11, or the computer is enabled to perform the method according to any one of claims 12 to 19.

[FIG. 1]

[FIG. 2]

[FIG. 3]

[FIG. 4]

[FIG. 5]

Coding system 10

Source device 12
- Image source 16
- Pre-processor 18
- Encoder 20
- Communication interface 22

Image data 17
Pre-processed image data 19
Encoded image data 21

Communication channel 13

Target device 14
- Display device 34
- Post-processor 32
- Decoder 30
- Communication interface 28

Post-processed image data 33
Decoded image data 31
Encoded image data 21

[FIG. 6]

2100

2106

Computer/Notebook computer
2110

Network video recorder/Digital video recorder 2112

2102

Television 2114

2104

2126

Set-top box 2116

Capture device

Display

Video conference system 2118

Video surveillance system 2120

Personal digital assistant 2112

Vehicle-mounted device 2124

...

[FIG. 7]

[FIG. 8]

```
┌──────────────┐              ┌──────────────┐
│   Material   │              │ Generation of│
│  production  │              │   dynamic    │
│              │              │   metadata   │
└──────┬───────┘              └──────┬───────┘
       │                             │ Dynamic
       │                             │ metadata
       ▼                             ▼
┌──────────────┐              ┌──────────────┐
│ Editing/Color│              │              │
│  correction  │─────────────▶│   Encoding   │
│              │  Original    │              │
└──────────────┘  video file  └──────────────┘
```

Material production → Editing/Color correction

Original video file → Generation of dynamic metadata

Dynamic metadata → Encoding

Encoding → Compressed video → Delivery/Transmission → Decoding → Decompressed video → Display processing

Production & Post-production

Delivery and transmission

Terminal application

EP 4 694 121 A1

[FIG. 9]

[FIG. 10]

[FIG. 11]

[FIG. 12]

Obtain a first HDR image and base layer data corresponding to the first HDR image — 1201

Determine first intermediate enhancement layer data based on the first HDR image and the first base layer data — 1202

Process the first intermediate enhancement layer data based on a first mapping relationship, to obtain first enhancement layer data — 1203

Encode the first base layer data, the first enhancement layer data, and first metadata, to obtain a bitstream — 1204

[FIG. 13]

| | |
|---|---|
| Decode an obtained bitstream, to obtain first base layer data, first enhancement layer data, and first metadata | 1301 |

| | |
|---|---|
| Process the first enhancement layer data based on a third mapping relationship, to obtain third intermediate enhancement layer data | 1302 |

| | |
|---|---|
| Determine a second HDR image based on the third intermediate enhancement layer data and the first base layer data | 1303 |

[FIG. 14]

Electronic device
1400

Obtaining unit
1401

Processing unit
1402

Encoding unit
1403

[FIG. 15]

Electronic device
1500

Decoding unit
1501

Processing unit
1502

## INTERNATIONAL SEARCH REPORT

| International application No. |
|---|
| **PCT/CN2024/111119** |

**A. CLASSIFICATION OF SUBJECT MATTER**

H04N 19/157(2014.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: HDR, 高动态范围, BL, 基本层, 基础层, EL, 增强层, 元数据, 中间, 映射, 第一, 第二, 编码, 解码, high dynamic range, enhancement layer, basic layer, metadata, intermediate, first, second, encode, decode

**C. DOCUMENTS CONSIDERED TO BE RELEVANT**

| Category* | Citation of document, with indication, where appropriate, of the relevant passages | Relevant to claim No. |
|---|---|---|
| A | US 2013314495 A1 (DOLBY LABORATORIES LICENSING CORP.) 28 November 2013 (2013-11-28)<br>description, paragraphs 0045-0062, and figures 1, 2A, and 2B | 1-25 |
| A | CN 107950025 A (THOMSON LICENSING) 20 April 2018 (2018-04-20)<br>entire document | 1-25 |
| A | CN 111491168 A (HUAWEI SOFTWARE TECHNOLOGIES CO., LTD. et al.) 04 August 2020 (2020-08-04)<br>entire document | 1-25 |
| A | CN 109891888 A (INTERDIGITAL VC HOLDINGS, INC.) 14 June 2019 (2019-06-14)<br>entire document | 1-25 |
| A | US 2014348232 A1 (DOLBY LABORATORIES LICENSING CORP.) 27 November 2014 (2014-11-27)<br>entire document | 1-25 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 November 2024** | **13 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/111119**

| Patent document cited in search report | | | Publication date (day/month/year) | Patent family member(s) | | | Publication date (day/month/year) |
|---|---|---|---|---|---|---|---|
| US | 2013314495 | A1 | 28 November 2013 | EP | 2667610 | A2 | 27 November 2013 |
| | | | | HK | 1190544 | A0 | 04 July 2014 |
| CN | 107950025 | A | 20 April 2018 | EP | 3113492 | A1 | 04 January 2017 |
| | | | | EP | 3318062 | A1 | 09 May 2018 |
| | | | | US | 2018199032 | A1 | 12 July 2018 |
| | | | | JP | 2018524916 | A | 30 August 2018 |
| | | | | WO | 2017001344 | A1 | 05 January 2017 |
| | | | | KR | 20180021733 | A | 05 March 2018 |
| CN | 111491168 | A | 04 August 2020 | None | | | |
| CN | 109891888 | A | 14 June 2019 | EP | 3301925 | A1 | 04 April 2018 |
| | | | | US | 2019238895 | A1 | 01 August 2019 |
| | | | | EP | 3520409 | A1 | 07 August 2019 |
| | | | | WO | 2018060051 | A1 | 05 April 2018 |
| | | | | KR | 20190052022 | A | 15 May 2019 |
| | | | | JP | 2019534611 | A | 28 November 2019 |
| US | 2014348232 | A1 | 27 November 2014 | EP | 2752000 | A1 | 09 July 2014 |
| | | | | WO | 2013033596 | A1 | 07 March 2013 |

Form PCT/ISA/210 (patent family annex) (July 2022)

**EP 4 694 121 A1**

**Patent documents cited in the description**

- CN 202311032268

- CN 202411081644